# EUROPÄISCHE PATENTSCHRIFT

(11) **EP 3 697 635 B1**
(45) Veröffentlichungstag und Bekanntmachung des Hinweises auf die Patenterteilung: **08.12.2021**
(21) Anmeldenummer: 18785877.4
(22) Anmeldetag: 01.10.2018
(51) Int. Cl.: B60H 1/00, B60H 1/32, F25B 40/00, F25B 39/00, F25B 30/00, F25B 29/00, F25B 5/02, F25B 6/02, F25B 49/00, F25B 41/20, F25B 9/00

(54) **VERFAHREN ZUM BETREIBEN EINES KÄLTEMITTELKREISLAUFS SOWIE FAHRZEUGKÄLTEANLAGE**
METHOD FOR OPERATING A COOLANT CIRCUIT AND VEHICLE AIR-CONDITIONING SYSTEM
PROCÉDÉ SERVANT À FAIRE FONCTIONNER UN CIRCUIT FRIGORIFIQUE AINSI QU'UNE INSTALLATION DE RÉFRIGÉRATION DE VÉHICULE

(30) Priorität: 16.10.2017 DE 102017218424
(43) Veröffentlichungstag der Anmeldung: 26.08.2020
(73) Patentinhaber: Audi AG, 85045 Ingolstadt (DE)
(72) Erfinder: SCHROEDER, Dirk, 85077 Manching (DE); REBINGER, Christian, 80807 München (DE)
(86) Internationale Anmeldenummer: PCT/EP2018/076575
(87) Internationale Veröffentlichungsnummer: WO 2019/076615

(56) Entgegenhaltungen:
- DE-A1- 10 163 607
- DE-A1-102011 118 162
- DE-A1-102013 021 360
- DE-A1-102015 015 125
- US-A1- 2016 129 757

## Beschreibung

Die Erfindung betrifft ein Verfahren zum Betreiben eines Kältemittelkreislaufs einer Fahrzeugkälteanlage in einem AC-Betrieb und in einem Heizbetrieb mittels einer Wärmepumpenfunktion.

Die DE10 2011 118 162 A1 beschreibt einen in einem AC- und Heizbetrieb betreibbaren Kältemittelkreislauf einer Fahrzeugkälteanlage mit einer Wärmepumpenfunktion und ein Verfahren zum Betreiben der Fahrzeugkälteanlage mit Funktionsabläufen zur Kältemittelverlagerung, indem Kältemittel aus nicht aktiven Bereichen abgesaugt und in aktive Bereiche der Kälteanlage beim Anfahren überströmt oder in deren Betrieb durch eine Schaltung einer Verbindung der nicht aktiven Bereiche mit der aktiven Niederdruckseite der Kälteanlage eingespeist wird. Diese als Kältekreislauf für einen AC-Betrieb und als Wärmepumpenkreislauf für eine Heizfunktion betreibbare Fahrzeugkälteanlage umfasst einen Primärstrang mit einem Verdichter, einem äußeren Wärmeübertrager als Kälteanlagenkondensator oder Wärmepumpenverdampfer, einem Kältemittelsammler, einem inneren Wärmeübertrager mit einer Hochdruckpassage und einer Niederdruckpassage für das Kältemittel, einem Expansionsorgan und einem Verdampfer sowie einen Sekundärstrang mit einem Heizkondensator mit einem zugeordneten Expansionsorgan. Ferner ist ein absperrbarer Bypass vorgesehen, welcher zur Durchströmung der Hochdruckpassage des inneren Wärmeübertragers zwischen dem Hochdruckausgang des inneren Wärmeübertragers und dem äußeren Wärmeübertrager angeordnet ist und ein Expansionsorgan aufweist, welches dem äußeren Wärmeübertrager in seiner Funktion als Wärmepumpenverdampfer für den Heizbetrieb zugeordnet ist.

Die DE 10 2015 015 125 A1 offenbart eine Fahrzeugklimaanlage mit einem als Wärmepumpenkreislauf mit Heizfunktion und als Kältekreislauf mit Kühlfunktion betreibbaren Kältemittelkreislauf. Dieser Kühlmittelkreislauf umfasst einen Verdampfer, einen Kältemittelverdichter, einen ersten Kältemittelkondensator/Gaskühler, ein dem Verdampfer zugeordnetes erstes Expansionsorgan, einen Kältemittel-Kühlmittel-Wärmeübertrager, einen Heizungswärmeübertrager zur Durchführung der Heizfunktion, ein Klimagerät, in welchem der Verdampfer und der Heizungswärmeübertrager angeordnet sind und einen in Strömungsrichtung des Kältemittels dem Kältemittel-Kühlmittel-Wärmeübertrager nachgeschalteten zweiten Kältemittelkondensator/Gaskühler, der im Heizbetrieb Wärme an einen in den Fahrzeuginnenraumströmenden Zuluftstrom abgibt. Dieser zweite Kältemittelkondensator/Gaskühler ist in dem Klimagerät in Strömungsrichtung des Zuluftstromes zwischen dem Verdampfer und dem Heizungswärmeübertrager angeordnet.

Die DE101 63 607 A1 beschreibt eine Fahrzeugklimaanlage, welche sowohl zum Kühlen von in den Fahrgastraum eingebrachter Zuluft ausgelegt ist und welche auch als Wärmepumpe betreibbar ist. Im Wärmepumpenbetrieb durchströmt das mittels eines Kältemittelverdichters verdichtete und erhitzte Kältemittel einen ersten Wärmetauscher, welcher in einem Klimagerät des Fahrzeugs angeordnet ist. Dem ersten Wärmetauscher ist ein erstes Expansionsventil nachgeschaltet, welches im Wärmepumpenbetrieb das Kältemittel ungedrosselt passieren lässt. Ein stromabwärts dieses ersten Expansionsventils ebenfalls in dem Klimagerät angeordneter zweiter Wärmetauscher dient dann ebenso wie der erste Wärmetauscher als Gaskühler. Über die zwei Gaskühler ist Wärmeenergie auf das Klimagerät durchströmende Luft übertragbar, welche dann als erwärmte Zuluft in den Fahrzeuginnenraum eintritt. Dem zweiten Wärmetauscher ist ein weiteres Expansionsventil nachgeschaltet, welches im Wärmepumpenbetrieb für die weitere starke Abkühlung des Kältemittels sorgt. Das Einbringen von Wärme in das expandierte Kältemittel erfolgt in einem Motorkühlmittel-Wärmetauscher. Anschließend strömt das Kältemittel wieder dem Kältemittelverdichter zu. Beim Betreiben der Fahrzeugklimaanlage als Kälteanlage dient ein weiterer, nicht im Klimagerät angeordneter Wärmetauscher als Gaskühler und der im Klimagerät angeordnete zweite Wärmetauscher als Verdampfer. Im Kälteanlagenbetrieb wird das Kältemittel auch mittels des ersten Expansionsventils entspannt.

Aus der DE 10 2013 021 360 A1 ist ein Verfahren zum Betreiben eines Kältemittelkreislaufs einer Fahrzeugklimaanlage in einem AC-Betrieb und in einem Heizbetrieb mittels einer Wasser-Wärmepumpenfunktion bekannt, wobei diese Wasser-Wärmepumpenfunktion mittels eines Chillers realisiert wird. Dieser Kältemittelkreislauf umfasst einen Verdampferzweig mit einem Verdampfer und einem zugehörigen Expansionsorgan, einen AC-Zweig mit einem äußeren Kondensator, welcher einerseits über ein Absperrorgan mit einem Kältemittelverdichter und andererseits über eine Abzweigung mit dem Verdampferzweig verbunden ist, wobei dem Verdampferzweig zumindest ein aus einem Chiller und einem zugeordneten Expansionsorgan bestehenden Chiller-Zweig parallel geschaltet ist. Ferner verbindet ein Heizzweig mit einem inneren Heizkondensator (auch Heizregister genannt) den Hochdruckausgang des Kältemittelverdichters mittels eines weiteren Absperrorgans mit der Abzweigung, wobei jeweils mit einem weiteren Absperrorgan der Heizzweig und der AC-Zweig in Richtung der Abzweigung gesperrt wird. Somit ist es möglich, durch entsprechende Steuerung dieser beiden Absperrorgane entweder im AC-Betrieb den AC-Zweig über die Abzweigung mit dem Verdampferzweig und/oder dem Chiller-Zweig zu verbinden oder im Heizbetrieb den Heizzweig über die Abzweigung an den Chiller-Zweig oder sowohl an den Chiller-Zweig als auch an den Verdampferzweig anzuschließen. Das aus dieser DE 10 2013 021 360 A1 bekannte Verfahren sieht vor, dass im reinen Kühlmodus einer mit dem Chiller thermisch verbundenen Fahrzeugbatterie über die Stellung des dem Chiller zugeordneten Expansionsorgans eine Kältemitteltemperatur am Austritt des Chillers nahe an der Taulinie des verwendeten Kältemittels zum Erreichen einer maximalen Kälteleistung bei minimaler Leistungsaufnahme des Verdichters eingestellt wird.

Die DE 10 2006 024 796 A1 beschreibt einen Kältemittelkreislauf einer Fahrzeugklimaanlage mit einer Kühl- und Heizfunktion mit einem Kältemittelverdichter, einem äußeren Kondensator und einem inneren Wärmetauscher mit zugeordnetem Expansionsorgan, wobei der innere Wärmetauscher in Strömungsrichtung eines in die Fahrzeugkabine geführten Zuluftstroms in zwei Teilwärmetauscher geteilt ist. Zur Realisierung unterschiedlicher Betriebsmodi kann mittels den dem Kältemittelverdichter nachgeschalteten Absperrorganen das verdichtete Kältemittel entweder dem äußeren Kondensator, dem ersten Teilwärmetauscher oder aufgeteilt sowohl dem äußeren Kondensator als auch dem ersten Teilwärmetauscher zugeführt werden. Der erste Teilwärmetauscher wird vorzugsweise zum Kühlen des Zuluftstromes, also als Kältemittelverdampfer eingesetzt und der zweite in Strömungsrichtung des Zuluftstromes nachgeschaltete zweite Teilwärmetauscher vorzugsweise zum Erwärmen des Zuluftstromes, also als innerer Heizkondensator bzw. Heizregister verwendet. Ferner ist es auch möglich, die beiden Teilwärmetauscher bei maximaler Kühlanforderung als Kältemittelverdampfer zum Kühlen oder bei maximaler Heizanforderung zum Erwärmen zu verwenden. Schließlich ist auch ein Reheat-Betrieb vorgesehen, indem der erste Teilwärmetauscher als Kältemittelverdampfer und gleichzeitig der zweite Teilwärmetauscher als Heizkondensator arbeitet und dadurch die in einer ersten Stufe anfallende Kondensationswärme durch Entfeuchten des Zuluftstroms gemeinsam mit der Verdichterabwärme für die Erwärmung des Zuluftstromes in einer zweiten Stufe verwendet wird.

Bei diesen aus dem Stand der Technik bekannten Kältemittelkreisläufen werden im Heizbetrieb, insbesondere bei Verwendung des Kältemittels R744, (CO2) die jeweiligen Heizregister von Kältemittel mit hoher Temperatur durchströmt. Da ein Heizregister in einem Klimagerät angeordnet ist, führen die hohen Temperaturen des Kältemittels zu einer hohen Materialbeanspruchung, insbesondere am Gehäuse des Klimagerätes. Dies erfordert kostenintensive Maßnahmen zur Entkopplung des Heizregisters und der Leitungen vom Gehäuse des Klimagerätes.

Ferner sind auch Maßnahmen zur Kältemittelabsaugung aus im AC-Betrieb oder Heizbetrieb entstehenden Totvolumina bei den bekannten Kältemittelkreisläufen erforderlich, jedoch hinsichtlich Bauteilbedarf nicht optimal umgesetzt.

So wird gemäß der DE 10 2013 021 360 A1 Kältemittel insbesondere für den Wasserwärmepumpen-Betrieb aus dem AC-Zweig abgesaugt, indem der äußere Kondensator stromaufwärtsseitig oder alternativ auch stromabwärtsseitig über ein Absperrorgan und ein Rückschlageventil mit der Niederdruckseite des Kältemittelverdichters oder zumindest mit der Niederdruckseite verbindbar ist. Dies hat den Vorteil, dass trotzt geöffnetem Absperrorgan bei einem Druckanstieg und einer damit verbundenen Strömungsumkehr eine Rückströmung in das Totvolumen über das Rückschlagventil unterbunden wird. Nachteilig sind in diesem Fall die zusätzlichen Kosten verursachenden Komponenten, wie Rückschlagventil und evtl. die komplette Leitung mit Absperrventil.

Bei dem Kältemittelkreislauf gemäß der DE 10 2006 024 796 A1 sind keine Maßnahmen zur Absaugung von Kältemittel aus Totvolumina im AC-Betrieb oder Heizbetrieb vorgesehen. Dies hat den Nachteil, dass eine undefinierte Menge an Kältemittel im Totvolumen verschwindet bzw. verbleibt und dem aktiven Prozess nicht mehr zur Verfügung steht und damit die Anlage im nachteiligsten Fall unterfüllt und ineffizient betrieben wird.

Ausgehend vom Stand der Technik stellt sich die Aufgabe, ein Verfahren zum Betreiben eines Kältemittelkreislaufs einer Fahrzeugkälteanlage in einem AC-Betrieb und in einem Heizbetrieb mittels einer Wärmepumpenfunktion anzugeben, mit welchem eine hohe Materialbeanspruchung des Gehäuses eines inneren Heizkondensators (Heizregister), insbesondere bei Verwendung von R744 als Kältemittel vermieden wird. Ferner ist es Aufgabe der Erfindung einen Kältemittelkreislauf zur Durchführung des erfindungsgemäßen Verfahrens anzugeben.

Die erstgenannte Aufgabe wird gelöst durch ein Verfahren zum Betreiben eines Kältemittelkreislaufs einer Fahrzeugklimaanlage mit den Merkmalen des Patentanspruchs 1

Ein solches Verfahren zum Betreiben eines Kältemittelkreislaufs einer Fahrzeugkälteanlage in einem AC-Betrieb und in einem mittels einer Wärmepumpenfunktion realisierten Heizbetrieb mit:
- einem Verdampferzweig mit einem Verdampfer und einem dem Verdampfer zugeordneten ersten Expansionsorgan,
- einem Kältemittelverdichter,
- einem AC- und Wärmepumpenzweig mit einem äußeren Kondensator oder Gaskühler und einem demselben in seiner Funktion als Wärmepumpenverdampfer für den Heizbetrieb zugeordneten zweiten Expansionsorgan, wobei der AC- und Wärmepumpenzweig über ein erstes Absperrorgan mit dem Hochdruckausgang des Kältemittelverdichters und über das zweite Expansionsorgan mit dem Verdampferzweig verbunden wird,
- einem Heizzweig mit einem inneren Heizkondensator oder Heizgaskühler und einem demselben stromabwärts nachgeschalteten zweiten Absperrorgan, wobei der Heizzweig mit dem Hochdruckausgang des Kältemittelverdichters über ein drittes Absperrorgan und über das zweite Absperrorgan mit dem Verdampferzweig und mit dem zweiten Expansionsorgan verbunden wird,
- einem dritten Expansionsorgan, mit welchem der Heizzweig mit dem AC- und Wärmepumpenzweig derart verbunden wird, dass zur Abgabe von Wärme an die Fahrzeugumgebung Kältemittel mittels des dritten Expansionsorgans in den äußeren Kondensator oder Gaskühler entspannt wird, und
- einem Temperaturmessmittel zur Bestimmung der Kältemitteltemperatur am Eintritt des Heizkondensators oder Heizgaskühlers, zeichnet sich dadurch aus, dass
- im Heizbetrieb die Kältemitteltemperatur am Eintritt des inneren Heizkondensators oder Heizgaskühlers auf einen maximalen Temperaturwert beschränkt wird.

Bei diesem erfindungsgemäßen Verfahren wird durch eine Beschränkung der Kältemitteltemperatur am Eintritt des inneren Heizkondensators auf einen maximalen Temperaturwert im Heizbetrieb eine Beschädigung des inneren Heizkondensators, primär jedoch des Kunststoffgehäuses des Klimageräts, der sog. HVAC-Einheit, verhindert. Der maximale Temperaturwert kann in Abhängigkeit der maximal zulässigen und verträglichen Werkstofftemperatur des Gehäusewerkstoffes des Klimagerätes bestimmt werden. Im AC-Betrieb wird ein Durchströmen des inneren Heizkondensators durch ein Absperren des Heizzweiges mittels des zweiten Absperrorgans verhindert und somit auch im AC-Betrieb der innere Heizkondensator bzw. das Klimagerät vor einer Beschädigung geschützt.

Es bietet sich an, das Temperaturmessmittel mit einem Druckmessmittel zu kombinieren, um den Hochdruck am Ausgang des Kältemittelverdichters zu überwachen und auf einen maximal zulässigen Hochdruckwert zu beschränken.

Vorzugsweise wird zur Bestimmung der Kältemitteltemperatur am Eintritt des inneren Heizkondensators oder Heizgaskühlers ein Temperaturmessmittel am Hochdruckausgang des Kältemittelverdichters angeordnet, wobei die Kältemitteltemperatur am Eintritt des Heizkondensators oder Heizgaskühlers mittels des von dem Temperaturmessmittel erzeugten Sensorwertes aus einem Kennfeld ermittelt wird. Alternativ oder zusätzlich wird mittels eines am Eintritt des Heizkondensators oder Heizgaskühlers angeordneten Temperaturmessmittels die Kältemitteltemperatur bestimmt. Wird ein solches Temperaturmessmittel, bspw. ein Temperatursensor zusätzlich verwendet, kann dieser eine Überwachungsfunktion zur Darstellung einer Schutzfunktion ausüben.

Eine besonders vorteilhafte Weiterbildung der Erfindung sieht vor, dass bei einem Betriebsstart im AC-Betrieb folgende Verfahrensschritte durchgeführt werden:
- Absaugen von Kältemittel aus dem Heizzweig durch Öffnen des zweiten Absperrorgans und Schließen sowohl des dritten Absperrorgans als auch des dritten Expansionsorgans, und
- Schließen des zweiten Absperrorgans entweder bei steigendem Kältemitteldruck stromabwärts des zweiten Absperrorgans oder nach einer definierten Zeitspanne.

Für dieses Verfahren zur Realisierung einer Absaugung von Kältemittel aus einem Totvolumen des inneren Heizkondensators oder Heizgaskühlers für den AC-Betrieb werden die vorhandenen Leitungen des Kältemittelkreislaufs benutzt, es sind also keine zusätzlichen Leitungsabschnitte oder Ventilkomponenten erforderlich. Das zweite Absperrorgan wird in Abhängigkeit des Kältemitteldrucks stromabwärts desselben oder nach einer definierten Zeitspanne geschlossen.

Die definierte Zeitspanne wird dadurch bestimmt, dass im System für dieses Zeitfenster, auf bspw. 5 Minuten beschränkt, eine niedrigere luftseitige Verdampferaustrittstemperatur angefordert wird als es im Normalbetrieb der Fall ist (bspw. 1°C statt 3°C). Damit stellt sich ein niedrigerer systemseitiger Niederdruck ein und das Absaugpotenzial steigt an. Mit Ablauf der definierten und vorgegebenen Zeitspanne wird das System auf die Standardparameter zurückgestellt, wobei unmittelbar davor das zweite Absperrventil geschlossen wird, um eine Kältemittelrückströmung in den Heizzweig zu vermeiden.

Wird zum Schließen des zweiten Absperrorgans der Kältemitteldruck als Signal und Bezugsgröße verwendet, kann dieser indirekt oder direkt bestimmt werden.

Zur indirekten Bestimmung des Kältemitteldrucks wird die Gebläselast eines Gebläses eines Klimagerätes und/oder der von einem Steuergerät des Kältemittelkreislaufs gesetzte Sollwert der Lufttemperatur am Verdampfer und/oder der Druckverlauf des Kältemittels auf der Niederdruckseite des Kältemittelkreislaufs erfasst, und bei fallender Gebläselast und/oder bei ansteigendem Sollwert und/oder bei ansteigendem Kältemitteldruck auf der Niederdruckseite das zweite Absperrorgan unmittelbar vor dem Eintreten der Veränderung geschlossen. Die Signale, dass eine Veränderung bevorsteht können über die entsprechenden (Klima-) Steuergeräte erfasst und ausgewertet werden, so dass unmittelbar vor Eintreten des Ereignisses ein Schließen des zweiten Absperrorgans erfolgt.

Zur direkten Bestimmung des Kältemitteldrucks wird dieser stromabwärts des zweiten Absperrorgans mittels eines demselben stromabwärts nachgeschalteten Drucksensors direkt bestimmt.

Eine weitere besonders bevorzugte Weiterbildung der Erfindung sieht vor, dass bei einem Betriebsstart im Heizbetrieb mittels einer Wasserwärmepumpenfunktion oder eines Dreiecksprozesses folgende Verfahrensschritte durchgeführt werden:
- Bereitstellen eines Chiller-Zweiges mit einem Chiller und einem zugeordneten vierten Expansionsorgan zur Realisierung der Wasserwärmepumpenfunktion, wobei der Chiller-Zweig parallel zum Verdampferzweig geschaltet wird,
- Absaugen von Kältemittel aus dem AC- und Wärmepumpenzweig durch Öffnen eines vierten Absperrorgans, welches den AC- und Wärmepumpenzweig mit der Niederdruckseite des Kältemittelkreislaufs verbindet, und Schließen sowohl des dritten und des zweiten Expansionsorgans als auch des ersten Absperrorgans, und
- Schließen des vierten Absperrorgans entweder bei steigendem Kältemitteldruck stromabwärts des vierten Absperrorgans oder nach einer definierten Zeitspanne.

Für dieses Verfahren zur Realisierung einer Absaugung von Kältemittel aus einem Totvolumen des äußeren Kondensators oder Gaskühlers für den Heizbetrieb mittels der Wasserwärmepumpenfunktion oder des Dreiecksprozesses werden die vorhandenen Leitungen des Kältemittelkreislaufs benutzt, sind also keine zusätzlichen Leitungsabschnitte oder Ventilkomponenten erforderlich. Das vierte Absperrorgan wird in Abhängigkeit des Kältemitteldrucks stromabwärts desselben oder nach einer definierten Zeitspanne geschlossen.

Die definierte Zeitspanne wird dadurch bestimmt, dass seitens eines Steuergerätes der im System einzustellende Saugdruck für einen auf bspw. 5 Minuten befristeten Zeitraum auf den minimal zulässigen Wert eingestellt wird bzw. dieser systemseitig gezielt anzufahren ist, bevor mit Ablauf dieser Zeitspanne das vierte Absperrventil geschlossen wird und sich der Niederdruck auf einem höheren Niveau einfinden bzw. einstellen kann, je nach der zu diesem Zeitpunkt verfügbaren Wassertemperatur, die ihrerseits das Niederdruckniveau beeinflusst.

Wird zum Schließen des vierten Absperrorgans der Kältemitteldruck verwendet, kann dieser indirekt oder direkt bestimmt werden.

Zur indirekten Bestimmung des Kältemitteldrucks wird die Kühlmitteltemperatur des Chillers detektiert und bei ansteigender Kühlmitteltemperatur das vierte Absperrorgan geschlossen.

Zur direkten Bestimmung des Kältemitteldrucks wird dieser stromabwärts des vierten Absperrorgans mittels eines demselben stromabwärts nachgeschalteten Drucksensors direkt bestimmt.

Bei einem alternativen Verfahren zur Realisierung einer Absaugung von Kältemittel aus einem Totvolumen des inneren Heizkondensators oder Heizgaskühlers für den AC-Betrieb werden weiterbildungsgemäß folgende Verfahrensschritte durchgeführt:
- Bereitstellen eines dem zweiten Absperrorgan nachgeschalteten Rückschlagventils zur Unterbindung einer Rückströmung von Kältemittel ins Totvolumen,
- Absaugen von Kältemittel aus dem Heizzweig durch Öffnen des zweiten Absperrorgans und Schließen sowohl des dritten Absperrorgans als auch des dritten Expansionsorgans, und
- Entspannen des Kältemittels stromabwärts des zweiten Absperrorgans auf Niederdruckniveau mittels des zweiten Expansionsorgans bei gleichzeitig maximal geöffnetem ersten und/oder vierten Expansionsorgan.

Auch bei diesem Verfahren werden die bereits vorhandenen Bestandsleitungen des Kältemittelkreislaufs verwendet. Zur Sicherstellung des für die Absaugung aus dem Heizzweig erforderlichen Niederdrucks übernimmt das zweite Expansionsorgan die Expansionsfunktion des Kältemittels direkt innerhalb des Abschnitts stromabwärts vom zweiten Absperrorgan, eingegrenzt durch besagtes zweites Absperrventil sowie durch das erste, zweite und vierte Expansionsorgan.

Bei einem weiteren alternativen Verfahren zur Realisierung einer Absaugung von Kältemittel aus einem Totvolumen des inneren Heizkondensators oder Heizgaskühlers für den AC-Betrieb werden weiterbildungsgemäß folgende Verfahrensschritte durchgeführt:
- Bereitstellen eines Wärmepumpenrückführzweiges mit einem vierten Absperrorgan und einem Rückschlagventil, wobei mit dem Wärmepumpenrückführzweig der AC- und Wärmepumpenzweig mit dem Verdampferzweig stromabwärts des Verdampfers verbunden wird,
- Bereitstellen eines Absaugzweiges mit einem fünften Expansionsorgan, wobei mit dem Absaugzweig der Wärmepumpenrückführzweig mit dem Heizzweig stromabwärts des inneren Heizkondensators oder Heizgaskühlers verbunden wird, und
- Absaugen von Kältemittel aus dem Heizzweig durch Öffnen des fünften Expansionsorgans und Schließen sowohl des zweiten,dritten und vierten Absperrorgans als auch des dritten Expansionsorgans.

Mit dem diesem Verfahren zugrunde liegenden Kältemittelkreislauf, insbesondere jedoch mit Einführung des fünften Expansionsorgans, kann über den Wärmepumpenrückführzweig und den Absaugzweig in vorteilhafterweise ein direkter Dreiecksprozess mit kürzest möglichen Leitungslängen durchgeführt werden.

Die zweitgenannte Aufgabe wird gelöst durch eine Fahrzeugkälteanlage mit den Merkmalen des Patentanspruchs 12.

Eine solche Fahrzeugkälteanlage mit einem Kältemittelkreislauf für einen AC-Betrieb und für einen mittels einer Wärmepumpenfunktion durchgeführten Heizbetrieb zur Durchführung des erfindungsgemäßen Verfahrens umfasst folgende Komponenten:
- einen Verdampferzweig mit einem Verdampfer und einem dem Verdampfer zugeordneten ersten Expansionsorgan,
- einen Kältemittelverdichter,
- einen AC- und Wärmepumpenzweig mit einem äußeren Kondensator oder Gaskühler und einem demselben in seiner Funktion als Wärmepumpenverdampfer für den Heizbetrieb zugeordneten zweiten Expansionsorgan, wobei der AC- und Wärmepumpenzweig über ein erstes Absperrorgan mit dem Hochdruckausgang des Kältemittelverdichters und über das zweite Expansionsorgan mit dem Verdampferzweig und mit dem zweiten Expansionsorgan verbindbar ist,
- einen Heizzweig mit einem inneren Heizkondensator oder Heizgaskühler und einem demselben stromabwärts nachgeschalteten zweiten Absperrorgan, wobei der Heizzweig mit dem Hochdruckausgang des Kältemittelverdichters über ein drittes Absperrorgan und über das zweite Absperrorgan mit dem Verdampferzweig verbindbar ist,
- ein drittes Expansionsorgan, mit welchem der Heizzweig mit dem AC- und Wärmepumpenzweig derart verbindbar ist, dass zur Abgabe von Wärme an die Fahrzeugumgebung Kältemittel mittels des dritten Expansionsorgans in den äußeren Kondensator oder Gaskühler entspannt wird, und
- ein Temperaturmessmittel zur Bestimmung der Kältemitteltemperatur am Eintritt des Heizkondensators oder Heizgaskühlers.

Ein solcher Kältemittelkreislauf zur Durchführung des erfindungsgemäßen Verfahrens weist einen einfachen Aufbau auf, mit welchem auch die Absaugungsprozesse für den AC-Betrieb und den Heizbetrieb durchführbar sind. Weitere vorteilhafte Ausgestaltungen dieses Kältemittelkreislaufs ergeben sich aus den abhängigen Patentansprüchen.

Weitere Vorteile, Merkmale und Einzelheiten der Erfindung ergeben sich aus der nachfolgenden Beschreibung bevorzugter Ausführungsformen sowie anhand der Zeichnungen. Dabei zeigen:
- Figur 1: ein Kältemittelkreislauf eine Fahrzeugkälteanlage zur Durchführung des erfindungsgemäßen Verfahrens als erstes Ausführungsbeispiel,
- Figur 2: ein Kältemittelkreislauf eine Fahrzeugkälteanlage zur Durchführung des erfindungsgemäßen Verfahrens als zweites Ausführungsbeispiel,
- Figur 3: ein Kältemittelkreislauf eine Fahrzeugkälteanlage zur Durchführung des erfindungsgemäßen Verfahrens als drittes Ausführungsbeispiel, und
- Figur 4: ein Kältemittelkreislauf eine Fahrzeugkälteanlage zur Durchführung des erfindungsgemäßen Verfahrens als viertes Ausführungsbeispiel.

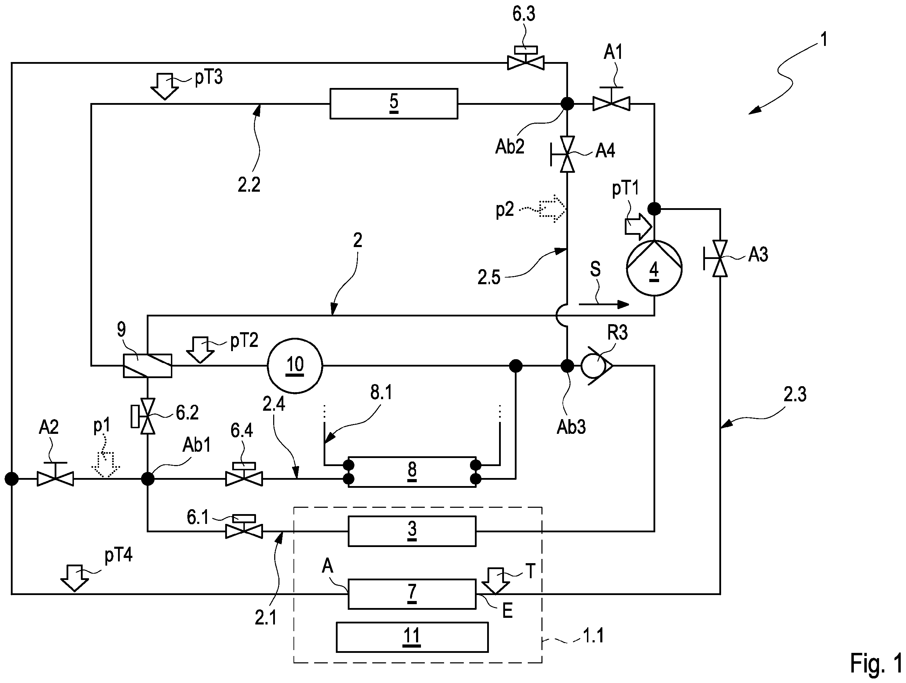

Die in den Figuren 1 bis 4 jeweils dargestellten Kältemittelkreisläufe 2 einer Fahrzeugkälteanlage 1 weisen die gleiche Grundstruktur auf, die zunächst beschrieben wird, um anschließend die Unterschiede zwischen den Kältemittelkreisläufen 2 zu erläutern. Diese Kältemittelkreisläufe 2 sind in einem AC-Betrieb und in einem mittels einer Wärmepumpenfunktion realisierten Heizbetrieb betreibbar.

Ein solcher Kältemittelkreislauf 2 besteht aus einem in einem Verdampferzweig 2.1 angeordneten Verdampfer 3 mit zugeordnetem ersten Expansionsorgan 6.1, einem Kältemittelverdichter 4, einem in einem AC- und Wärmepumpenzweig 2.2 angeordneten äußeren Kondensator 5 oder Gaskühler 5 mit einem demselben in seiner Funktion als Wärmepumpenverdampfer für den Heizbetrieb zugeordneten zweiten Expansionsorgan 6.2, wobei dieser AC- und Wärmepumpenzweig 2.2 einerseits über ein als Absperrventil ausgeführtes erstes Absperrorgan A1 mit dem Hochdruckausgang des Kältemittelverdichters 4 und andererseits über das zweite Expansionsorgan 6.2 unter Bildung eines Abzweigpunktes Ab1 mit dem Verdampferzweig 2.1 verbunden ist. Zwischen dem zweiten Expansionsorgan 6.2 und dem äußeren Kondensator 5 bzw. Gaskühler 5 ist die Hochdruckseite eines inneren Wärmeübertragers 9 angeordnet, dessen niederdruckseitigem Abschnitt, angeordnet zwischen Verdampfer 2 und Kältemittelverdichter 4, stromaufwärtsseitig ein Kältemittelsammler 10 vorgeschaltet ist.

Ferner besteht der Kältemittelkreislauf 2 aus einem Heizzweig 2.3 mit einem inneren Heizkondensator 7 oder Heizgaskühler 7 (die auch als Heizregister bezeichnet werden) und einem demselben stromabwärts nachgeschalteten zweiten als Absperrventil ausgeführten zweiten Absperrorgan A2. Ausgehend von der Hochdruckseite des Kältemittelverdichters 4 ist der Heizzweig 2.3 mittels eines als Absperrventil ausgebildeten dritten Absperrorgans A3 mit dem Kältemittelverdichter 4 verbunden, während stromabwärts der Heizzweig 2.3 nach dem inneren Heizkondensators 7 oder Heizgaskühlers 7 einerseits über das zweite Absperrorgan A2 und den Abzweigpunkt Ab1 mit dem Verdampferzweig 2.1 und andererseits über ein drittes Expansionsorgan 6.3 unter Bildung eines Abzweigpunktes Ab2 mit dem äußeren Kondensator 5 oder Gaskühler 5 verbunden ist.

Der Abzweigpunkt Ab2 verbindet das erste Absperrorgan A1 mit dem äußeren Kondensator 5 oder Gaskühler 5 und ist über einen Wärmepumpenrückführzweig 2.5 mit einem als Absperrventil ausgeführten vierten Absperrorgan A4 unter Bildung eines Abzweigpunktes Ab3 mit der Niederdruckseite des Kältemittelverdichters 4 verbunden. Stromaufwärtsseitig ist dieser Abzweigpunkt Ab3 über ein Rückschlagventil R3 mit dem Verdampferzweig 2.1 und stromabwärtsseitig mit dem Kältemittelsammler 10 verbunden, so dass das Kältemittel aus diesem Wärmepumpenrückführzweig 2.5 über den Kältemittelsammler 10 und die Niederdruckseite des inneren Wärmeübertragers 9 zum Kältemittelverdichter 4 zurückgeführt wird.

Schließlich weist der Kältemittelkreislauf 2 einen in einem Chiller-Zweig 2.4 angeordneten Chiller 8 mit einem demselben zugeordneten vierten Expansionsorgan 6.4 auf. Dieser Chiller-Zweig 2.4 ist dem Verdampferzweig 2.1 parallel geschaltet, verbindet also den Abzweigpunkt Ab1 mit dem Leitungsabschnitt zwischen dem Rückschlagventil R3 und dem Kältemittelsammler 10. Dieser Chiller 8 ist ein Kältemittel-Kühlmittel-Wärmeübertrager mit einem Kühlmittelkreislauf 8.1 mit bspw. Wasser als Kühlmittel und dient zur Kühlung bspw. einer elektrischen Antriebsmaschine, einer Leistungselektronik und/ oder einer Batterie. Ferner wird ein solcher Chiller 8 zur Realisierung einer Wasser-Wärmepumpenfunktion eingesetzt, indem die Abwärme von elektronischen und/oder elektrischen Komponenten genutzt wird.

Der Verdampfer 3 sowie der inneren Heizkondensators 7 oder Heizgaskühler 7 sind zusammen mit einem elektrischen Heizelement 11 als Zuheizer für den in den Fahrzeuginnenraum geführten Zuluftstrom in einem Klimagerät 1.1 angeordnet. Dieses elektrische Heizelement 11 kann bspw. als Hochvolt-PTC-Heizelement ausgeführt werden.

Mit den beiden Absperrorganen A1 und A3 wird der Kältemittelstrom ausgehend von der Hochdruckseite des Kältemittelverdichters 4 in Abhängigkeit des Zustandes der beiden Absperrorgane A1 und A3 entweder bei offenem Absperrorgan A1 und gesperrtem Absperrorgan A3 in den AC- und Wärmepumpenzweig 2.2 geleitet oder strömt bei offenem Absperrorgan A3 und geschlossenem Absperrorgan A1 in den Heizzweig 2.3. Die beiden Absperrorgane A1 und A3 können auch zu einem 3-2-Wegeventil als Schaltventil ausgeführt werden.

In einer weitere Ausführungsvariante lassen sich die mindestens 3 Absperrventile A1, A3 und A4 zu einem Mehrwegeventil zusammenführen.

Im AC-Betrieb des Kältemittelkreislaufs 1.1 strömt das auf Hochdruck verdichtete Kältemittel ausgehend von dem Kältemittelverdichter 2 bei offenem Absperrorgan A1 in den AC- und Wärmepumpenzweig 2.2 und wird über den äußeren Kondensator 5 oder Gaskühler 5, den Hochdruckabschnitt des inneren Wärmeübertragers 9, das vollständig geöffnete zweite Expansionsorgan 6.2 sowie des Abzweigpunktes Ab1 mittels des ersten Expansionsorgans 6.1 in den Verdampfer 3 oder mittels des vierten Expansionsorgans 6.4 in den Chiller 8, gegebenenfalls auch gleichzeitig in den Verdampfer 8 und in Chiller 8 entspannt. Aus dem Verdampfer 3 wird das Kältemittel über das Rückschlagventil R3, über den Kältemittelsammler 10 und die Niederdruckseite des inneren Wärmeübertragers 9 zum Kältemittelverdichter 4 zurückgeführt. Entsprechend strömt auch das Kältemittel aus dem Chiller 8 über den Kältemittelsammler 10 und die Niederdruckseite des inneren Wärmeübertragers 9 zurück zum Kältemittelverdichter 4.

In diesem AC-Betrieb ist der Heizzweig 2.3 mittels des dritten Absperrorgans A3 abgesperrt, so dass heißes Kältemittel, bspw. R744 aufgrund dessen hohen Temperatur nicht durch den Heizgaskühler 7 strömen kann und damit eine Schädigung des Klimageräts 1.1 verhindert wird.

Im Heizbetrieb unter Einsatz des Chillers 8 zur Realisierung einer Wasser-Wärmepumpe oder unter Einsatz des äußeren Kondensators 5 oder Gaskühlers 5 als Wärmepumpenverdampfer zur Realisierung einer Luft-Wärmepumpe wird das erste Absperrorgan A1 geschlossen und das dritte Absperrorgan A3 geöffnet, so dass heißes Kältemittel, bspw. R744 in den Heizzweig 2.3 strömen kann. Um eine Bauteilschädigung des Klimageräts 1.1 durch das heiße Kältemittel zu verhindern, wird die Heißgastemperatur, insbesondere bei Verwendung von R744 als Kältemittel am Eintritt E des inneren Heizkondensators 7 oder Heizgaskühlers 7 auf einen maximalen Temperaturwert beschränkt. Dieser Temperaturwert wird in Abhängigkeit der maximal verträglichen Werkstofftemperatur des für das Klimagerät 1.1. verwendeten Werkstoffes festgelegt.

Zur Bestimmung der Kältemitteltemperatur am Eintritt E des inneren Heizkondensators 7 oder Heizgaskühlers 7 wird ein als Druck- und Temperatursensor ausgeführtes Temperaturmessmittel pT1 am Hochdruckausgang des Kältemittelverdichters 4 angeordnet. Aus dem Temperaturwert dieses Temperaturmessmittels pT1 wird mittels eines bspw. in einem Klimasteuergerät abgelegten Kennfeldes oder einer Kennlinie der Temperaturwert am Eintritt E des Heizkondensators 7 oder Heizgaskühlers 7 bestimmt. Anstelle dieses Temperaturmessmittels pT1 am Hochdruckausgang des Kältemittelverdichters 4 kann auch direkt am Eintritt E des inneren Heizkondensators 7 oder des Heizgaskühlers 7 ein als Temperatursensor ausgebildetes Temperaturmessmittel T angeordnet werden, mit welchem die Temperatur des Kältemittels direkt bestimmt wird. Alternativ können beide Temperaturmessmittel pT1 und T eingesetzt werden, wobei in diesem Fall auch das Temperaturmessmittel T als Schutzfunktion eingesetzt wird.

Mit dem Druckwert des als Druck- und Temperatursensor ausgeführten Temperaturmessmittel pT1 am Hochdruckausgang des Kältemittelverdichters 4 wird der Hochdruckwert des Kältemittels überwacht und auf einen maximal zulässigen Hochdruckwert beschränkt.

Zur Durchführung der Heizfunktion mittels des Chillers 8 strömt das mittels des Kältemittelverdichters 4 verdichtete Kältemittel über das geöffnete dritte Absperrorgan A3 zur Abgabe von Wärme an einen in den Fahrzeuginnenraum geführten Zuluftstrom in den inneren Heizkondensator 7 oder Heizgaskühler 7 und wird anschließend über das geöffnete zweite Absperrorgan A2 und den Abzweigpunkt Ab1 mittels des vierten Expansionsorgans 6.4 in den Chiller 8 zur Aufnahme von Abwärme der in dem Kühlmittelkreislauf 8.1 angeordneten elektrischen und/oder elektronischen Komponenten entspannt. Bei dieser Heizfunktion ist das zweite und dritte Expansionsorgan 6.2 und 6.3 geschlossen.

Zur Durchführung der Heizfunktion mittels des äußeren Kondensators 5 oder des Gaskühlers 5 als Wärmepumpenverdampfer strömt das mittels des Kältemittelverdichters 4 verdichtete Kältemittel über das geöffnete dritte Absperrorgan A3 zur Abgabe von Wärme an den in den Fahrgastinnenraum geführten Zuluftstrom in den inneren Heizkondensators 7 oder Heizgaskühlers 7 und wird anschließend über das geöffnete zweite Absperrorgan A2 mittels des zweiten Expansionsorgans 6.2 in den äußeren Kondensator 5 oder Gaskühler 5 zur Aufnahme von Wärme aus der Umgebungsluft entspannt und strömt anschließend über den Wärmepumpenrückführzweig 2.5 zurück zum Kältemittelverdichter 4.

Eine indirekte Dreiecksschaltung wird dadurch realisiert, dass bei geöffnetem zweiten Absperrorgan A2 das von dem Kältemittelverdichter 2 verdichtete Kältemittel mittels des vierten Expansionsorgans 6.4 in den Chiller 8 entspannt wird, wobei gleichzeitig kühlmittelseitig, also in dem Kühlmittelkreislauf 8.1 kein Massenstrom erzeugt wird, also bspw. das als Kühlmittel verwendete Wasser auf der Kühlmittelseite des Chillers 8 stehen bleibt bzw. der Chiller 8 nicht aktiv von Kühlmittel durchströmt wird.

Bei einem Reheat-Betrieb wird der in den Fahrzeuginnenraum zugeführte Zuluftstrom mittels des Verdampfers 3 zunächst gekühlt und damit entfeuchtet, um anschließend mit der dem Zuluftstrom entzogenen Wärme mittels des inneren Heizkondensators 7 oder des Heizgaskühlers 7 diesen Zuluftstrom wieder zu erwärmen. Ein Reheat-Betrieb des Kältemittelkreislaufs 2 wird in Abhängigkeit der Wärmebilanz auf unterschiedliche Weise durchgeführt.

So wird bei ausreichender Heizleistung im Kältemittelkreislauf 2 nur der Verdampfer 3 mit Kältemittel durchströmt, indem der innere Heizkondensator oder Heizgaskühler 7 stromabwärtsseitig mittels des geöffneten zweiten Absperrorgans A2 über das erste Expansionsorgan 6.1 mit dem Verdampfer 3 fluidverbunden wird, wobei das dem Chiller 8 zugeordnete vierte Expansionsorgan 6.4 und ebenso wie die zum Kondensator 5 bzw. Gaskühler 5 führende Expansionsorgane 6.2 und 6.3 gesperrt sind. Aus dem Verdampfer 3 strömt das Kältemittel über das Rückschlagventil R3, den Kältemittelsammler 10 und den inneren Wärmeübertrager 9 wieder zurück zum Kältemittelverdichter 4, wobei die im Verdampfer 3 aufgenommene Wärme gemeinsam mit dem über den Kältemittelverdichter 4 eingetragenen Wärmestrom über den inneren Kondensator 7 oder Gaskühler 7 wieder an einen in das Fahrzeuginnere geführten Zuluftstrom abgegeben wird.

Bei einem Wärmemangel im Kältemittelkreislauf 2 wird zur Wärmeaufnahme zusätzlich zum Verdampfer 3 auch der Chiller 8 durch Öffnen des vierten Expansionsorgans 6.4 und/oder der äußere Kondensator 5 oder Gaskühler 5 mittels des zweiten Expansionsorgans 6.2 parallel geschaltet.

Bei einer parallelen Nutzung der Abwärme aus dem Chiller 8 als auch der Umgebungswärme mittels des äußeren Kondensators 5 oder Gaskühlers 5 wird das von dem Kältemittelverdichter 4 verdichtete Kältemittel über den inneren Heizkondensator oder Heizgaskühler 7 bei geöffnetem zweiten Absperrorgan A2 bei geschlossenem dritten Expansionsorgan 6.3 an dem Abzweigpunkt Ab1 in drei Teilströme aufgeteilt, nämlich in einen über das zweite Absperrorgan 6.2 in den äußeren Kondensator 5 oder Gaskühler 5 entspannten Teilstrom, einen über das vierte Expansionsorgan 6.4 in den Chiller 8 entspannten Teilstrom und einen durch den Verdampfer 3 über das erste Expansionsorgan 6.1 strömenden Teilstrom. Die Führungsgröße für den sich einstellenden Saugdruck stellt der Verdampfer 3 dar und gibt damit die Mindestdrucklage für Chiller 8 und den als Wärmepumpenverdampfer eingesetzten äußeren Kondensator 5 oder Gaskühler 5 vor. Umgangen werden kann dies mit einer Integration eines weiteren sechsten Expansionsorgans stromabwärts des Verdampfers 3, so dass dieser auf ein beliebiges Mitteldruckniveau eingestellt werden kann, bevor für Chiller 8 und äußeren Kondensator 5 oder Gaskühler 5 eine weitere Druckabsenkung erfolgt.

Bei einem Wärmeüberschuss im Reheat-Betrieb wird neben dem inneren Heizkondensator oder Heizgaskühler 7 zusätzlich über den äußeren Kondensator 5 oder Gaskühler 5 Wärme an die Umgebung des Fahrzeugs abgegeben, bevor das Kältemittel über den Verdampfer 3 wieder zurück zum Kältemittelverdichter 4 strömt. Hierzu wird mittels des dritten Expansionsorgans 6.3 das Kältemittel zur Kondensation auf einen über dem Verdampfungsdruck liegenden Zwischendruck entspannt und anschließend mittels des ersten Expansionsorgans 6.1 in den Verdampfer 3 auf Niederdruck expandiert.

Zur Steuerung dieser unterschiedlichen Betriebsmodi sind neben dem als Druck-Temperatursensor ausgeführten Temperaturmessmittel pT1 weitere Druck-Temperatursensoren pT2, pT3 und pT4 in dem Kältemittelkreislauf 2 angeordnet. Der Druck-Temperatursensor pT2 befindet sich zwischen dem Kältemittelsammler 10 und der Niederdruckseite des inneren Wärmeübertragers 9, der Druck-Temperatursensor pT3 zwischen dem äußeren Kondensator 5 oder Gaskühler 5 und der Hochdruckseite des inneren Wärmeübertragers 9 und der Druck-Temperatursensor pT4 ist dem anderen Heizkondensator oder Heizgaskühler 7 stromabwärts nachgeschaltet.

Nachfolgend sollen die Unterschiede der Kältemittelkreisläufe 2 einer Fahrzeugkälteanlage 1 gemäß den Figuren 1 bis 3 jeweils im Detail erläutert werden.

Bei der Fahrzeugkälteanlage 1 gemäß Figur 1 werden zur Realisierung einer Absaugung von Kältemittel aus Totvolumen für den AC-Betrieb oder den Heizbetrieb Bestandsleitungen des Kältemittelkreislaufs 2 genutzt.

Bei einem Betriebsstart im AC-Betrieb werden folgende Verfahrensschritte durchgeführt:
- Öffnen des zweiten Absperrorgans A2 und Schließen sowohl des dritten Absperrorgans A3 als auch des dritten Expansionsorgans 6.3, wodurch der Heizzweig 2.3 vom übrigen Kältemittelkreislauf 2 abgesperrt wird,
- Absaugen von Kältemittel aus dem Heizzweig 2.3, und
- Schließen des zweiten Absperrorgans A2 entweder bei steigendem Kältemitteldruck stromabwärts des zweiten Absperrorgans A2 oder nach einer definierten Zeitspanne, um eine Rückverlagerung von Kältemittel in den Heizzweig 2.3 zu verhindern.

Es muss jedoch gewährleistet sein, das stromabwärts des Absperrventils A2 Niederdruck anliegt, eingestellt über das zweite Expansionsorgan 6.2.

Für dieses Verfahren zur Realisierung einer Absaugung von Kältemittel aus einem Totvolumen des inneren Heizkondensators 7 oder Heizgaskühlers 7 für den AC-Betrieb werden die vorhandenen Leitungen des Kältemittelkreislaufs 2 benutzt, sind also keine zusätzlichen Leitungsabschnitte oder Ventilkomponenten erforderlich. Auf die bekannte Verwendung eines Rückschlagventils wird verzichtet.

Wird zum Schließen des zweiten Absperrorgans A2 der Kältemitteldruck verwendet, kann dieser indirekt oder direkt bestimmt werden.

Zur indirekten Bestimmung des Kältemitteldrucks wird die Gebläselast eines Gebläses des Klimagerätes 1.1 und/oder der von einem Steuergerät des Kältemittelkreislaufs 2 gesetzte Sollwert der Lufttemperatur am Verdampfer 3 und/oder der Druckverlauf des Kältemittels auf der Niederdruckseite des Kältemittelkreislaufs 2 erfasst, und bei fallender Gebläselast und/oder bei ansteigendem Sollwert und/oder bei ansteigendem Kältemitteldruck auf der Niederdruckseite das zweite Absperrorgan A2 geschlossen.

Zur direkten Bestimmung des Kältemitteldrucks wird dieser stromabwärts des zweiten Absperrorgans A2 mittels eines demselben stromabwärts nachgeschalteten Drucksensors p1 (vgl. Figur 1) direkt bestimmt.

Bei einer Verwendung der alternativen Methode, das zweite Absperrorgan A2 nach einer definierten Zeitspanne zu schließen, wird diese dadurch bestimmt, dass im System für dieses Zeitfenster, auf bspw. 5 Minuten beschränkt, eine niedrigere luftseitige Verdampferaustrittstemperatur angefordert wird als es im Normalbetrieb der Fall ist (bspw. 1°C statt 3°C). Damit stellt sich ein niedrigerer systemseitiger Niederdruck ein und das Absaugpotenzial steigt an. Mit Ablauf der definierten und vorgegebenen Zeitspanne wird das System auf die Standardparameter zurückgestellt, wobei unmittelbar davor das zweite Absperrventil A2 geschlossen wird, um eine Kältemittelrückströmung in den Heizzweig zu vermeiden.

Ein solcher Absaugprozess kann nach jedem Neustart der Fahrzeugkälteanlage 1 wiederholt werden, ist jedoch nicht erforderlich, wenn vorab ein 100 %-iger AC-Betrieb durchgeführt wurde. Sollten die Organe A3 und 6.3 nicht 100 % dichtend ausgeführt sein, wird bei jedem Neustart der Fahrzeugkälteanlage 1 mit Stillstandszeiten von bspw. größer als 1 Stunde ein solcher Absaugprozess erneut durchgeführt.

Bei einem Betriebsstart im Heizbetrieb mittels einer Wasserwärmepumpenfunktion werden folgende Verfahrensschritte durchgeführt:
- Öffnen eines vierten Absperrorgans A4 des Wärmepumpenrückführzweiges 2.5 und Schließen sowohl des zweiten und dritten Expansionsorgans 6.2 und 6.3 als auch des ersten Absperrorgans A1,
- Absaugen von Kältemittel aus dem AC- und Wärmepumpenzweig 2.2 über den Wärmepumpenrückführzweig 2.5, und
- Schließen des vierten Absperrorgans A4 entweder bei steigendem Kältemitteldruck stromabwärts des vierten Absperrorgans A4 oder nach einer definierten Zeitspanne, um eine Rückverlagerung von Kältemittel in den AC- und Wärmepumpenzweig 2.2 zu verhindern.

Für dieses Verfahren zur Realisierung einer Absaugung von Kältemittel aus einem Totvolumen des äußeren Kondensators 5 oder Gaskühlers 5 für den Heizbetrieb mittels der Wasserwärmepumpenfunktion werden die vorhandenen Leitungen des Kältemittelkreislaufs 2 benutzt, sind also keine zusätzlichen Leitungsabschnitte oder Ventilkomponenten erforderlich. Auf die bekannte Verwendung eines Rückschlagventils wird verzichtet. Das vierte Absperrorgan A4 wird in Abhängigkeit des Kältemitteldrucks stromabwärts desselben oder nach einer definierten Zeitspanne geschlossen.

Wird zum Schließen des vierten Absperrorgans A4 der Kältemitteldruck verwendet, kann dieser indirekt oder direkt bestimmt werden.

Zur indirekten Bestimmung des Kältemitteldrucks wird die Kühlmitteltemperatur des Chillers 8 detektiert und bei ansteigender Kühlmitteltemperatur das vierte Absperrorgan A4 geschlossen.

Zur direkten Bestimmung des Kältemitteldrucks wird dieser stromabwärts des vierten Absperrorgans A4 mittels eines demselben stromabwärts nachgeschalteten Drucksensors p2 direkt bestimmt.

Bei einer Verwendung der alternativen Methode, das vierte Absperrorgan A4 nach einer definierten Zeitspanne zu schließen, wird diese dadurch bestimmt, dass seitens eines Steuergerätes der Fahrzeugkälteanlage 1 der im System einzustellende Saugdruck für einen auf bspw. 5 Minuten beschränkten Zeitraum auf den minimal zulässigen Wert eingestellt wird bzw. dieser systemseitig gezielt anzufahren ist, bevor mit Ablauf dieser Zeitspanne das vierte Absperrventil A4 geschlossen wird und sich der Niederdruck auf einem höheren Niveau einfinden bzw. einstellen kann, je nach der zu diesem Zeitpunkt verfügbaren Wassertemperatur, die ihrerseits das Niederdruckniveau beeinflusst.

Ein solcher Absaugprozess kann nach jedem Neustart der Fahrzeugkälteanlage 1 wiederholt werden, ist jedoch nicht erforderlich, wenn vorab ein 100 %iger Heizbetrieb durchgeführt wurde. Sollten die Organe A1, 6.2 und 6.3 nicht 100 % dichtend ausgeführt sein, wird bei jedem Neustart der Fahrzeugkälteanlage 1 mit Stillstandszeiten von bspw. größer als 1 Stunde ein solcher Absaugprozess erneut durchgeführt.

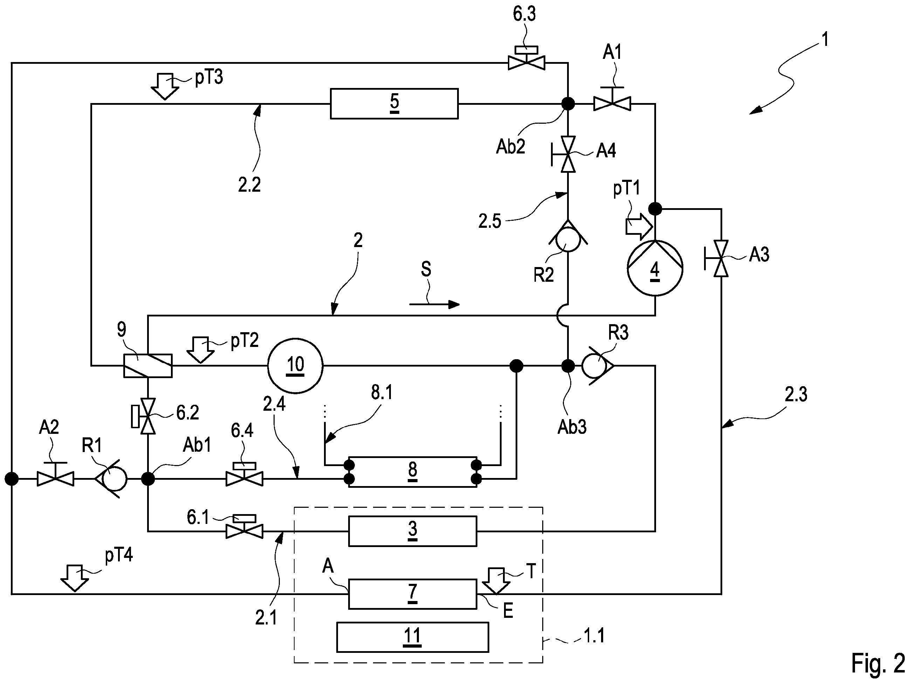

Der Kältemittelkreislauf 2 der Fahrzeugkälteanlage 1 gemäß Figur 2 unterscheidet sich von demjenigen gemäß Figur 1 lediglich dadurch, dass zwischen dem zweiten Absperrorgan A2 und dem Abzweigpunkt Ab1 ein erstes Rückschlagventil R1 und zwischen dem vierten Absperrorgan A4 und dem Abzweigpunkt Ab3 ein zweites Rückschlagventil R2 angeordnet ist.

Mit diesem Kältemittelkreislauf 2 gemäß Figur 2 lässt sich ein alternativer Absaugprozess für den AC-Betrieb im Vergleich zu demjenigen Absaugprozess, welcher im Zusammenhang mit Figur 1 beschrieben ist, umsetzen.

Auch bei diesem Absaugprozess werden Bestandsleitungen des Kältemittelkreislaufs 2 zur Realisierung der Absaugung von Kältemittel aus dem Heizzweig 2.3, insbesondere aus dem inneren Heizkondensator 7 oder Heizgaskühler.

Bei einem Betriebsstart im AC-Betrieb werden folgende Verfahrensschritte durchgeführt:
- Öffnen des zweiten Absperrorgans A2 und Schließen sowohl des dritten Absperrorgans A3 als auch des dritten Expansionsorgans 6.3,
- Absaugen von Kältemittel aus dem Heizzweig (2.3), und
- Entspannen des Kältemittels stromabwärts des zweiten Absperrorgans A2 auf Niederdruckniveau mittels des zweiten Expansionsorgans 6.2.

Damit eine Absaugung von Kältemittel über das zweite Absperrorgan A2 möglich ist, wird mittels des zweiten Expansionsorgans 6.2 das Kältemittel auf Niederdruckniveau stromabwärts des zweiten Absperrorgans entspannt. Das erste Rückschlagventil R1 verhindert eine Rückverlagerung von Kältemittel in den Heizzweig 2.3. Das zweite Rückschlagventil R2 dient dazu, dass bei steigender Niederdruckniveau während des aktiven Absaugprozesses ein Rückströmen von Kältemittel aus dem Niederdrucksektor in den AC- und Wärmepumpenzweig 2.2 automatisch unterbunden und damit die Umsetzung eines speziellen Absaugprozesses nicht erforderlich wird.

Während des Absaugprozesses können für den Betrieb des Verdampfers 3 und des Chillers 8 unterschiedliche Betriebsweisen mittels des Kältemittelkreislaufs 2 durchgeführt werden.

Bei einer Innenraumkühlung mittels des Verdampfers 3 oder bei einer Durchführung einer Kühlfunktion durch den Chiller 8 wird mittels des zweiten Expansionsorgans 6.2 entsprechend eines von einem Klimasteuergerät erzeugten Vorgabewertes der Kältemittel-Massenstrom eingeregelt.

Es ist auch möglich bei einem gleichzeitigen Betrieb sowohl des Verdampfers 3 als auch des Chillers 8, dass der Verdampfer 3 von dem zweiten Expansionsorgan 6.2 und der Chiller 8 mittels des vierten Expansionsorgans 6.4 geregelt wird, wobei das dem Verdampfer 3 zugeordnete erste Expansionsorgan 6.1 vollständig offen ist. Alternativ kann der Chiller 8 mittels des zweiten Expansionsorgans 6.2 und der Verdampfer 3 mittels des demselben zugeordneten ersten Expansionsorgans 6.1 geregelt werden, wobei in diesem Fall das Expansionsorgan 6.4 vollständig offen ist.

Ist die Absaugung abgeschlossen, übernehmen die beiden Expansionsorgane 6.1 und 6.2 die von einem Klimasteuergerät vorgegebenen Regelungen, wobei das zweite Expansionsorgan 6.2 vollständig geöffnet ist. Die Übergabe der primären Regelungsaufgabe des Expansionsorgans 6.2 zurück auf das Expansionsorgan 6.1 und/ oder das Expansionsorgans 6.4 erfolgt kontinuierlich und stufenlos, um Funktionsstörung im Anlagenbetrieb zu vermeiden

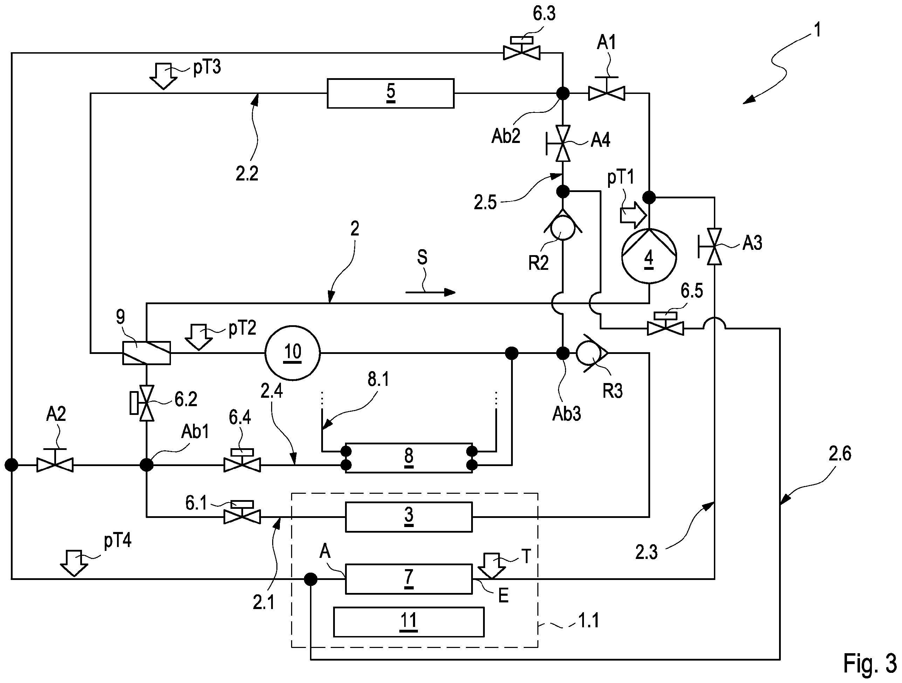

Der Kältemittelkreislauf 2 der Fahrzeugkälteanlage 1 gemäß Figur 3 unterscheidet sich von demjenigen nach Figur 1 dadurch, dass ein Rückschlagventil R2 in dem Wärmepumpenrückführzweig 2.5 zwischen dem Absperrorgan A4 und dem Abzweigpunkt Ab3 angeordnet ist und ein Absaugzweig 2.6 mit einem fünften Expansionsorgan 6.5 diesen Wärmepumpenrückführzweig 2.5, nämlich den Leitungsabschnitt zwischen dem vierten Absperrorgan A4 und dem Rückschlagventil R2 mit dem Austritt A des inneren Heizkondensators 7 oder Heizgaskühlers 7 verbindet.

Damit kann im AC-Betrieb über diesen Absaugzweig 2.6 bei geöffnetem Expansionsorgan 6.5 und geschlossenen Organen 6.3 und A3 Kältemittel aus dem Heizzweig 2.3 abgesaugt werden.

Der Einsatz eines Expansionsorgans 6.5 anstelle eines als Absperrventil ausgebildeten Absperrorgans ermöglicht die Durchführung eines direkten Dreiecksprozesses. Eine solche Wärmepumpenfunktion wird mittels des Absaugzweiges 2.6 bei fehlender Abwärme der als Wärmequellen im Fahrzeug verwendeten Komponenten und im Falle einer Vereisung des als Wärmepumpenverdampfer verwendeten äußeren Kondensators 5 oder Gaskühlers 5 dennoch Wärme über den inneren Heizkondensator 7 oder Heizgaskühler 7 an einen dem Fahrzeuginnenraum zugeführten Zuluftstrom übertragen. Hierbei wird unter Auslassung einer Verdampfung mittels des Verdampfers 3, des Chillers 8 oder des als Wärmepumpenverdampfer eingesetzten Kondensators 5 oder Gaskühlers 5 das Kältemittel lediglich verdichtet und die Verdichterwärme am inneren Heizkondensator 7 oder Heizgaskühler 7 abgegeben.

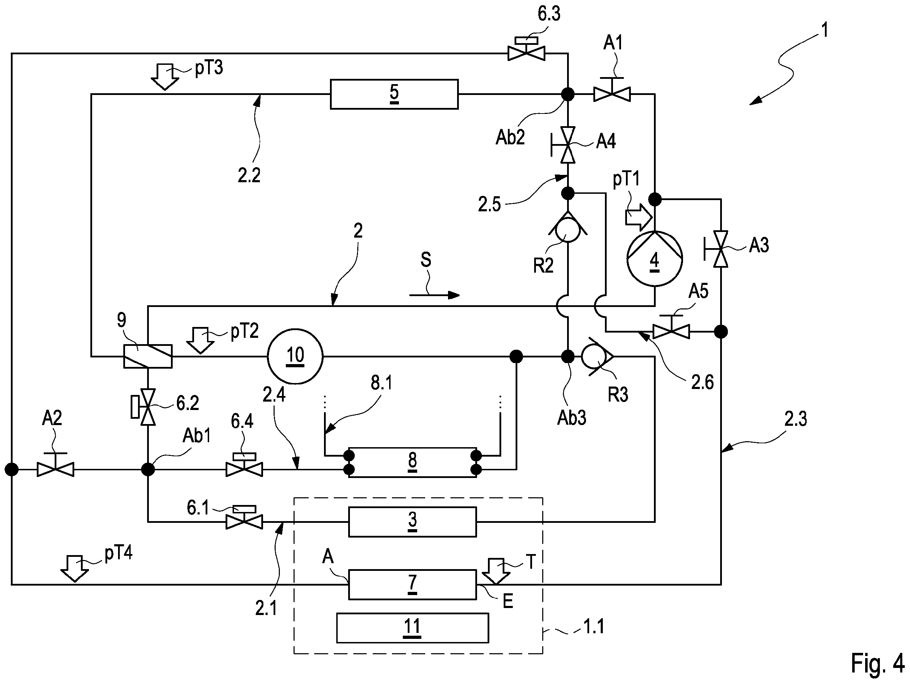

Der Kältemittelkreislauf 2 der Fahrzeugkälteanlage 1 nach Figur 4 unterscheidet sich von demjenigen gemäß Figur 3 lediglich dadurch, dass einerseits der Absaugzweig 2.6 nicht am Austritt des inneren Heizkondensators 7 oder Heizgaskühlers 7, sondern stromaufwärtsseitig diese Komponente, also zwischen dem dritten Absperrorgan A3 und diesem inneren Heizkondensators 7 oder Heizgaskühler 7 mit dem Heizzweig 2.3 verbunden ist, und der Absaugzweig 2.6 anstelle eines Expansionsorgans ein fünftes Absperrventil A5 aufweist.

Damit kann im AC-Betrieb dieses Kältemittelkreislaufes 2 gemäß der Figur 4 über diesen Absaugzweig 2.6 bei geöffnetem fünften Absperrventil A5 und geschlossenen Organen 6.3 und A3 Kältemittel aus dem Heizzweig 2.3 abgesaugt werden.

In Analogie zu den Beschreibungen des Kältemittelkreislaufs 2 nach Figur 1 hinsichtlich des Verzichts bzw. der Verfahren zur Realisierung der Einsparung der Rückschlagventile R1 und R2 kann diese Maßnahme auch für die Systemkonfigurationen gemäß den Figuren 2 bis 4 zur Anwendung kommen.

Bei den in den Figuren 1 bis 4 beschriebenen Kältemittelkreisläufen 2 wird der Reheat-Betrieb bei Wärmeüberschuss derart ausgeführt, dass über den äußeren Kondensator 5 oder Gaskühler 5 Wärme an die Umgebung des Fahrzeugs abgegeben wird, bevor das Kältemittel über den Verdampfer 3 wieder zurück zum Kältemittelverdichter 4 strömt. Hierzu wird der Heizzweig 2.3 über das dritte Expansionsorgan 6.3 mit dem AC- und Wärmepumpenzweig 2.2 verbunden, so dass Kältemittel in den äußeren Kondensator oder Gaskühler 5 auf einen Zwischendruck und anschließend mittels des ersten Expansionsorgans 6.1 in den Verdampfer 3 auf Niederdruck expandiert wird. Neben den beschriebenen Funktionen von Wasser- und Luft-Wärmepumpe ist auch der kombinierte Betrieb der beiden Verschaltungen möglich, d.h. es werden parallel die Wärmen aus dem Wasserkreis und aus der Umgebung aufgenommen. Die dargestellten Absaugfunktionen für Kältemittel finden hierbei jedoch keine Verwendung.

Weiterhin ist es denkbar, anstelle des direkten bzw. inneren Heizkondensators bzw. Heizgaskühlers 7 einen indirekten, wassergekühlten Kondensator bzw. Gaskühler einzusetzen, bevor über einen diesem nachgeschalteten Kühlmittel-Luft-Wärmeübertrager der Zuluftstrom der Kabine erwärmt wird. Die Absaugfunktionen werden in der oben beschriebenen Weise durchgeführt.

### BEZUGSZEICHEN:

- 1: Fahrzeugkälteanlage
- 1.1: Klimagerät der Fahrzeugkälteanlage 1

- 2: Kältemittelkreislauf der Fahrzeugkälteanlage 1
- 2.1: Verdampferzweig des Kältemittelkreislaufs 2
- 2.2: AC- und Wärmepumpenzweig des Kältemittelkreislaufs 2
- 2.3: Heizzweig des Kältemittelkreislaufs 2
- 2.4: Chiller-Zweig des Kältemittelkreislaufs 2
- 2.5: Wärmepumpenrückführzweig des Kältemittelkreislaufs 2
- 2.6: Absaugzweig des Kältemittelkreislaufs 2

- 3: Verdampfer
- 4: Kältemittelverdichter
- 5: äußere Kondensator, Gaskühler

- 6.1: erstes Expansionsorgan
- 6.2: zweites Expansionsorgan
- 6.3: drittes Expansionsorgan
- 6.4: viertes Expansionsorgan
- 6.5: fünftes Expansionsorgan

- 7: innerer Heizkondensator oder Heizgaskühler

- 8: Chiller
- 8.1: Kühlmittelkreislauf des Chillers 8

- 9: innerer Wärmetauscher
- 10: Kältemittelsammler
- 11: elektrisches Heizelement

- A: Austritt des Heizkondensators oder Heizgaskühler 7
- Ab1: Abzweigpunkt des Kältemittelkreislaufs 2
- Ab2: Abzweigpunkt des Kältemittelkreislaufs 2
- Ab3: Abzweigpunkt des Kältemittelkreislaufs 2

- A1: erstes Absperrorgan
- A2: zweites Absperrorgan
- A3: drittes Absperrorgan
- A4: viertes Absperrorgan
- A5: fünftes Absperrorgan

- E: Eintritt des Heizkondensators oder Heizgaskühlers 7

- p1: Drucksensor
- p2: Drucksensor
- pT1: Temperaturmessmittel

- R1: Rückschlagventil
- R2: Rückschlagventil

- S: Strömungsrichtung des Kältemittels
- T: Temperaturmessmittel

## Patentansprüche

1. Verfahren zum Betreiben eines Kältemittelkreislaufs (2) einer Fahrzeugkälteanlage (1) in einem AC-Betrieb und in einem mittels einer Wärmepumpenfunktion realisierten Heizbetrieb mit:
- einem Verdampferzweig (2.1) mit einem Verdampfer (3) und einem dem Verdampfer (3) zugeordneten ersten Expansionsorgan (6.1),
- einem Kältemittelverdichter (4),
- einem AC- und Wärmepumpenzweig (2.2) mit einem äußeren Kondensator oder Gaskühler (5) und einem demselben in seiner Funktion als Wärmepumpenverdampfer für den Heizbetrieb zugeordneten zweiten Expansionsorgan (6.2), wobei der AC- und Wärmepumpenzweig (2.2) über ein erstes Absperrorgan (A1) mit dem Hochdruckausgang des Kältemittelverdichters (4) und über das zweite Expansionsorgan (6.2) mit dem Verdampferzweig (2.1) verbunden wird,
- einem Heizzweig (2.3) mit einem inneren Heizkondensator oder Heizgaskühler (7) und einem demselben stromabwärts nachgeschalteten zweiten Absperrorgan (A2), wobei der Heizzweig (2.3) mit dem Hochdruckausgang des Kältemittelverdichters (4) über ein drittes Absperrorgan (A3) und über das zweite Absperrorgan (A2) mit dem Verdampferzweig (2.1) und mit dem zweiten Expansionsorgan (6.2) verbunden wird,
- einem dritten Expansionsorgan (6.3), mit welchem der Heizzweig (2.3) mit dem AC- und Wärmepumpenzweig (2.2) derart verbunden wird, dass zur Abgabe von Wärme an die Fahrzeugumgebung Kältemittel mittels des dritten Expansionsorgans (6.3) in den äußeren Kondensator oder Gaskühler (5) entspannt wird, und
- einem Temperaturmessmittel (T, pT1) zur Bestimmung der Kältemitteltemperatur am Eintritt (E) des inneren Heizkondensators oder Heizgaskühlers (7), wobei
- im Heizbetrieb die Kältemitteltemperatur am Eintritt (E) des inneren Heizkondensators oder Heizgaskühlers (7) auf einen maximalen Temperaturwert beschränkt wird.

2. Verfahren nach Anspruch 1, bei welchem
- ein Temperaturmessmittel (pT1) am Hochdruckausgang des Kältemittelverdichters (4) angeordnet wird, und
- die Kältemitteltemperatur am Eintritt (E) des Heizkondensators oder Heizgaskühlers (7) mittels des von dem Temperaturmessmittel erzeugten Sensorwertes aus einem Kennfeld ermittelt wird.

3. Verfahren nach Anspruch 1, bei welchem mittels eines am Eintritt (E) des Heizkondensators oder Heizgaskühlers (7) angeordnete Temperaturmessmittel (T) die Kältemitteltemperatur bestimmt wird.

4. Verfahren nach einem der vorhergehenden Ansprüche, bei welchem bei einem Betriebsstart im AC-Betrieb folgende Verfahrensschritte durchgeführt werden:
- Absaugen von Kältemittel aus dem Heizzweig (2.3) durch Öffnen des zweiten Absperrorgans (A2) und Schließen sowohl des dritten Absperrorgans (A3) als auch des dritten Expansionsorgans (6.3), und
- Schließen des zweiten Absperrorgans (A2) entweder bei steigendem Kältemitteldruck stromabwärts des zweiten Absperrorgans (A2) oder nach einer definierten Zeitspanne.

5. Verfahren nach Anspruch 4, bei welchem der Kältemitteldruck stromabwärts des zweiten Absperrorgans (A2) indirekt detektiert wird, indem die Gebläselast eines Gebläses eines Klimagerätes und/oder der von einem Steuergerät gesetzte Sollwert der Lufttemperatur am Verdampfer und/oder der Druckverlauf des Kältemittels auf der Niederdruckseite des Kältemittelkreislaufs erfasst wird, und bei fallender Gebläselast und/oder bei ansteigendem Sollwert und/oder bei ansteigendem Kältemitteldruck auf der Niederdruckseite das zweite Absperrorgan (A2) geschlossen wird.

6. Verfahren nach Anspruch 4, bei welchem der Kältemitteldruck stromabwärts des zweiten Absperrorgans (A2) mittels eines demselben stromabwärts nachgeschalteten Drucksensors (p1) direkt bestimmt wird.

7. Verfahren nach einem der vorhergehenden Ansprüche, bei welchem bei einem Betriebsstart im Heizbetrieb mittels einer Wasserwärmepumpenfunktion oder einem Dreiecksprozess folgende Verfahrensschritte durchgeführt werden:
- Bereitstellen eines Chiller-Zweiges (2.4) mit einem Chiller (8) und einem zugeordneten vierten Expansionsorgan (6.4) zur Realisierung der Wasserwärmepumpenfunktion, wobei der Chiller-Zweig (2.4) parallel zum Verdampferzweig (2.1) geschaltet wird,
- Absaugen von Kältemittel aus dem AC- und Wärmepumpenzweig (2.2) durch Öffnen eines vierten Absperrorgans (A4), welches den AC- und Wärmepumpenzweig (2.2) mit der Niederdruckseite des Kältemittelkreislaufs (2) verbindet, und Schließen sowohl des dritten Expansionsorgans (6.3) und des zweiten Expansionsorgans (6.2) als auch des ersten Absperrorgans (A1), und
- Schließen des vierten Absperrorgans (A4) entweder bei steigendem Kältemitteldruck stromabwärts des vierten Absperrorgans (A4) oder nach einer definierten Zeitspanne.

8. Verfahren nach Anspruch 7, bei welchem der Kältemitteldruck stromabwärts des vierten Absperrorgans (A4) indirekt detektiert wird, indem die Kühlmitteltemperatur des Chillers (8) detektiert wird, und bei ansteigender Kühlmitteltemperatur das vierte Absperrorgan (A4) geschlossen wird.

9. Verfahren nach Anspruch 7, bei welchem der Kältemitteldruck stromabwärts des vierten Absperrorgans (A4) mittels eines demselben stromabwärts nachgeschalteten Drucksensors (p2) direkt bestimmt wird.

10. Verfahren nach einem der Ansprüche 1 bis 3, bei welchem bei einem Betriebsstart im AC-Betrieb folgende Verfahrensschritte durchgeführt werden:
- Bereitstellen eines dem zweiten Absperrorgan (A2) nachgeschalteten Rückschlagventils (R1) zur Unterbindung einer Rückströmung von Kältemittel in den Heizzweig (2.3),
- Absaugen von Kältemittel aus dem Heizzweig (2.3) durch Öffnen des zweiten Absperrorgans (A2) und Schließen sowohl des dritten Absperrorgans (A3) als auch des dritten Expansionsorgans (6.3), und
- Entspannen des Kältemittels stromabwärts des zweiten Absperrorgans (A2) auf Niederdruckniveau mittels des zweiten Expansionsorgans (6.2) bei gleichzeitig maximal geöffnetem ersten Expansionsorgan (6.1) und/oder vierten Expansionsorgan (6.4).

11. Verfahren nach einem der Ansprüche 1 bis 3, bei welchem bei einem Betriebsstart im AC-Betrieb folgende Verfahrensschritte durchgeführt werden:
- Bereitstellen eines Wärmepumpenrückführzweiges (2.5) mit einem vierten Absperrorgan (A4) und einem Rückschlagventil (R2), wobei mit dem Wärmepumpenrückführzweig (2.5) der AC- und Wärmepumpenzweig (2.2) mit dem Verdampferzweig (2.1) stromabwärts des Verdampfers (3) verbunden wird,
- Bereitstellen eines Absaugzweiges (2.6) mit einem fünften Expansionsorgan (6.5), wobei mit dem Absaugzweig (2.6) der Wärmepumpenrückführzweig (2.5) mit dem Heizzweig (2.3) stromabwärts des inneren Heizkondensators oder Heizgaskühlers (7) verbunden wird, und
- Absaugen von Kältemittel aus dem Heizzweig (2.3) durch Öffnen des fünften Expansionsorgans (6.5) und Schließen sowohl des zweiten, dritten und vierten Absperrorgans (A2, A3, A4) als auch des dritten Expansionsorgans (6.3).

12. Fahrzeugkälteanlage (1) mit einem Kältemittelkreislauf (2) für einen AC-Betrieb und für einen mittels einer Wärmepumpenfunktion durchgeführten Heizbetrieb zur Durchführung des Verfahrens nach einem der vorhergehenden Ansprüche, umfassend:
- einen Verdampferzweig (2.1) mit einem Verdampfer (3) und einem dem Verdampfer zugeordneten ersten Expansionsorgan (6.1),
- einen Kältemittelverdichter (4),
- einen AC- und Wärmepumpenzweig (2.2) mit einem äußeren Kondensator oder Gaskühler (5) und einem demselben in seiner Funktion als Wärmepumpenverdampfer für den Heizbetrieb zugeordneten zweiten Expansionsorgan (6.2), wobei der AC- und Wärmepumpenzweig (2.2) über ein erstes Absperrorgan (A1) mit dem Hochdruckausgang des Kältemittelverdichters (4) und über das zweite Expansionsorgan (6.2) mit dem Verdampferzweig (2.1) verbindbar ist,
- einen Heizzweig (2.3) mit einem inneren Heizkondensator oder Heizgaskühler (7) und einem demselben stromabwärts nachgeschalteten zweiten Absperrorgan (A2), wobei der Heizzweig (2.3) mit dem Hochdruckausgang des Kältemittelverdichters (4) über ein drittes Absperrorgan (A3) und über das zweite Absperrorgan (A2) mit dem Verdampferzweig (2.1) und mit dem zweiten Expansionsorgan (6.2) verbindbar ist,
- ein drittes Expansionsorgan (6.3), mit welchem der Heizzweig (2.3) mit dem AC- und Wärmepumpenzweig (2.2) derart verbindbar ist, dass zur Abgabe von Wärme an die Fahrzeugumgebung Kältemittel mittels des dritten Expansionsorgans (6.3) in den äußeren Kondensator oder Gaskühler (5) entspannt wird, und
- ein Temperaturmessmittel (T, pT1) zur Bestimmung der Kältemitteltemperatur am Eintritt (E) des Heizkondensators oder Heizgaskühlers (7).

13. Fahrzeugkälteanlage (1) nach Anspruch 12, bei welchem dem zweiten Absperrorgan (A2) stromabwärts ein Drucksensor (p1) nachgeschaltet ist.

14. Fahrzeugkälteanlage (1) nach Anspruch 12 oder 13, bei welchem
- ein Chiller-Zweiges (2.4) mit einem Chiller (8) und einem zugeordneten vierten Expansionsorgan (6.4) zur Realisierung der Wasserwärmepumpenfunktion gesehen ist,
- der Chiller-Zweig (2.4) parallel zum Verdampferzweig (2.1) geschaltet ist, und
- ein viertes Absperrorgan (A4) vorgesehen ist, mit welchem der AC- und Wärmepumpenzweig (2.2) mit der Niederdruckseite des Kältemittelkreislaufs (2) verbunden ist, und
- ein dem vierten Absperrorgans (A4) stromabwärts nachgeschalteten Drucksensors (p2) gesehen ist.

15. Fahrzeugkälteanlage (1) nach Anspruch 12 , bei welchem dem zweiten Absperrorgan (A2) ein Rückschlagventils (R1) nachgeschaltet ist.

16. Fahrzeugkälteanlage (1) nach Anspruch 12, bei welchem
- ein Wärmepumpenrückführzweig (2.5) mit einem vierten Absperrorgan (A4) und einem Rückschlagventil (R2) vorgesehen ist, wobei mit dem Wärmepumpenrückführzweig (2.5) der AC- und Wärmepumpenzweig (2.2) mit dem Verdampferzweig (2.1) stromabwärts des Verdampfers (3) verbindbar ist,
- ein Absaugzweig (2.6) mit einem fünften Expansionsorgan (6.5) vorgesehen ist, wobei mit dem Absaugzweig (2.6) der Wärmepumpenrückführzweig (2.5) mit dem Heizzweig (2.3) stromabwärts des inneren Heizkondensators oder Heizgaskühlers (7) verbindbar ist.

## Claims

1. Method for operating a coolant circuit (2) of a vehicle air-conditioning system (1) in an air-conditioning mode and in a heating mode realised by means of a heat pump function having:
- an evaporator branch (2.1) having an evaporator (3) and a first expansion member (6.1) assigned to the evaporator (3),
- a coolant compressor (4),
- an air-conditioning and heat pump branch (2.2) having an external condenser or gas cooler (5) and a second expansion member (6.2) assigned to said external condenser or gas cooler in its function as a heat pump evaporator for the heating mode, wherein the air-conditioning and heat pump branch (2.2) is connected by way of a first shut-off member (A1) to the high-pressure outlet of the coolant compressor (4) and by way of the second expansion member (6.2) to the evaporator branch (2.1),
- a heating branch (2.3) having an internal heating condenser or heating gas cooler (7) and a second shut-off member (A2) arranged downstream of the same, wherein the heating branch (2.3) is connected by way of a third shut-off member (A3) to the high-pressure outlet of the coolant compressor (4), and by way of the second shut-off member (A2) to the evaporator branch (2.1) and to the second expansion member (6.2),
- a third expansion member (6.3) with which the heating branch (2.3) is connected to the air-conditioning and heat pump branch (2.2) such that, for outputting heat to the vehicle environment, coolant is relaxed by means of the third expansion member (6.3) into the outer condenser or gas cooler (5), and
- a temperature measuring means (T, pT1) for determining the coolant temperature at the inlet (E) of the internal heating condenser or heating gas cooler (7), wherein
- in the heating mode the coolant temperature at the inlet (E) of the internal heating condenser or heating gas cooler (7) is limited to a maximum temperature value.

2. Method according to claim 1, in which
- a temperature measuring means (pT1) is arranged at the high-pressure outlet of the coolant compressor (4) and
- the coolant temperature is determined from a characteristic field at the inlet (E) of the heating condenser or heating gas cooler (7) by means of the sensor value generated by the temperature measuring means.

3. Method according to claim 1, in which the coolant temperature is determined by means of a temperature measuring means (T) arranged at the inlet (E) of the heating condenser or heating gas cooler (7).

4. Method according to any of the preceding claims, in which in an operational start in air-conditioning mode the following method steps are carried out:
- suctioning of coolant out of the heating branch (2.3) by opening the second shut-off member (A2) and closing both the third shut-off member (A3) and the third expansion member (6.3), and
- closing the second shut-off member (A2) either when the coolant pressure downstream of the second shut-off number (A2) increases or after a defined period of time.

5. Method according to claim 4, in which the coolant pressure downstream from the second shut-off member (A2) is detected indirectly in that the fan load of a fan of an air-conditioning device and/or the target value, specified by a control device, of the air temperature at the evaporator and/or the pressure course of the coolant on the low pressure side of the cooling circuit is detected, and when the fan load decreases and/or when the target value increases and/or when the coolant pressure increases on the low pressure side, the second shut-off member (A2) is closed.

6. Method according to claim 4, in which the coolant pressure downstream from the second shut-off member (A2) is determined directly by means of a pressure sensor (p1) connected downstream of the same.

7. Method according to any of the preceding claims, in which in an operational start in heating mode by means of a water heat pump function or a triangular process the following method steps are carried out:
- providing a chiller branch (2.4) having a chiller (8) and an assigned fourth expansion member (6.4) for realising the hot water heat pump function, wherein the chiller branch (2.4) is connected parallel to the evaporator branch (2.1),
- suctioning coolant out of the air conditioner and heat pump branch (2.2) by opening a fourth shut-off member (A4) which connects the air-conditioner and heat pump branch (2.2) with the low-pressure side of the coolant circuit (2), and closing both the third expansion member (6.3) and the second expansion member (6.2) as well as the first shut-off member (A1) and
- closing the fourth shut-off member (A4) either when the coolant pressure downstream from the fourth shut-off member (A4) increases or after a defined time period.

8. Method according to claim 7, in which the coolant pressure downstream from the fourth shut-off member (A4) is indirectly detected in that the coolant temperature of the chiller (8) is detected, and when the coolant temperature increases, the fourth shut-off member (A4) is closed.

9. Method according to claim 7, in which the coolant pressure downstream from the fourth shut-off member (A4) is determined directly by means of a pressure sensor (p2) connected downstream from the same.

10. Method according to any of claims 1 to 3, in which in an operational start in air-conditioning mode the following method steps are carried out
- providing a check valve (R1) connected downstream from the second shut-off member (A2) for preventing a backflow of coolant into the heating branch (2.3),
- suctioning coolant out of the heating branch (2.3) by opening the second shut-off member (A2) and closing both the third shut-off member (A3) as well as the third expansion member (6.3), and
- relaxing the coolant downstream from the second shut-off member (A2) on low pressure level by means of the second expansion member (6.2) while the first expansion member (6.1) and/or fourth expansion member (6.4) are simultaneously maximally open.

11. Method according to any of claims 1 to 3, in which in an operational start in air-conditioning mode the following method steps are carried out
- providing a heat pump return branch (2.5) having a fourth shut-off member (A4) and a check valve (R2), wherein with the heat pump return branch (2.5) the air-conditioning and heat pump branch (2.2) is connected to the evaporator branch (2.1) downstream from the evaporator (3),
- providing a suction branch (2.6) with a fifth expansion member (6.5), wherein with the suction branch (2.6) the heat pump return branch (2.5) is connected to the heating branch (2.3) downstream from the internal heating condenser or heating gas cooler (7), and
- suctioning coolant out of the heating branch (2.3) by opening the fifth expansion member (6.5) and closing both the second, third and fourth shut-off members (A2, A3, A4) as well as the third expansion member (6.3).

12. Vehicle air-conditioning system (1) having a coolant circuit (2) for an air-conditioning mode and for a heating mode carried out by means of a heat pump function, for carrying out the method according to any of the preceding claims, comprising:
- an evaporator branch (2.1) having an evaporator (3) and a first expansion member (6.1) assigned to the evaporator,
- a coolant compressor (4),
- an air-conditioning and heat pump branch (2.2) having an external condenser or gas cooler (5) and a second expansion member (6.2) assigned to said external condenser or gas cooler in its function as a heat pump evaporator for the heating mode, wherein the air-conditioning and heat pump branch (2.2) can be connected by way of a first shut-off member (A1) to the high-pressure outlet of the coolant compressor (4) and by way of the second expansion member (6.2) to the evaporator branch (2.1),
- a heating branch (2.3) having an internal heating condenser or heating gas cooler (7) and a second shut-off member (A2) connected downstream therefrom, wherein the heating branch (2.3) can be connected by way of a third shut-off member (A3) to the high-pressure outlet of the coolant compressor (4), and by way of the second shut-off member (A2) to the evaporator branch (2.1) and to the second expansion member (6.2),
- a third expansion member (6.3), with which the heating branch (2.3) can be connected with the air-conditioning and heat pump branch (2.2) such that for outputting heat to the vehicle environment, coolant is relaxed by means of the third expansion member (6.3) into the external condenser or gas cooler (5), and
- a temperature measuring means (T, pT1) for specifying the coolant temperature at the inlet (E) of the heating condenser or heating gas cooler (7).

13. Vehicle air-conditioning system (1) according to claim 12, in which a pressure sensor (p1) is connected downstream from the second shut-off member (A2).

14. Vehicle air-conditioning system (1) according to claim 12 or 13, in which
- a chiller branch (2.4) having a chiller (8) and an assigned fourth expansion member (6.4) is seen for realising the water heat pump function,
- the chiller branch (2.4) is connected parallel to the evaporator branch (2.1), and
- a fourth shut-off member (A4) is provided with which the air-conditioning and heat pump branch (2.2) is connected to the low-pressure side of the coolant circuit (2), and
- a pressure sensor (p2) is seen connected downstream from the fourth shut-off member (A4).

15. Vehicle air-conditioning system (1) according to claim 12, in which a check valve (R1) is connected downstream from the second shut-off member (A2).

16. Vehicle air-conditioning system (1) according to claim 12, in which
- a heat pump return branch (2.5) having a fourth shut-off member (A4) and a check valve (R2) is provided, wherein with the heat pump return branch (2.5) the air-conditioning and heat pump branch (2.2) can be connected with the evaporator branch (2.1) downstream from the evaporator (3),
- a suction branch (2.6) having a fifth expansion member (6.5) is provided, wherein with the suction branch (2.6) the heat pump return branch (2.5) can be connected with the heat branch (2.3) downstream from the inner heat condenser or heating gas cooler (7).

## Revendications

1. Procédé de fonctionnement d'un circuit de réfrigérant (2) d'une installation de réfrigération de véhicule (1) dans un mode de climatisation et dans un mode de chauffage mis en œuvre au moyen d'une fonction de pompe à chaleur avec :
- une branche d'évaporateur (2.1) avec un évaporateur (3) et un premier organe d'expansion (6.1) affecté à l'évaporateur (3),
- un compresseur de réfrigérant (4),
- une branche de climatisation et de pompe à chaleur (2.2) avec un condensateur ou refroidisseur de gaz externe (5) et un deuxième organe d'expansion (6.2) affecté à celui-ci dans sa fonction d'évaporateur de pompe à chaleur pour le mode de chauffage, dans lequel la branche de climatisation et de pompe à chaleur (2.2) est connectée à la sortie haute pression du compresseur de réfrigérant (4) par un premier organe d'arrêt (A1) et à la branche d'évaporateur (2.1) par le deuxième organe d'expansion (6.2),
- une branche de chauffage (2.3) avec un condensateur de chauffage ou refroidisseur de gaz de chauffage interne (7) et un deuxième organe d'arrêt (A2) connecté en aval de celui-ci, dans lequel la branche de chauffage (2.3) est connectée à la sortie haute pression du compresseur de réfrigérant (4) par l'intermédiaire d'un troisième organe d'arrêt (A3) et par l'intermédiaire du deuxième organe d'arrêt (A2) à la branche d'évaporateur (2.1) et au deuxième organe d'expansion (6.2),
- un troisième organe d'expansion (6.3) avec lequel la branche de chauffage (2.3) est connectée à la branche de climatisation et de pompe à chaleur (2.2) de sorte que le réfrigérant est détendu dans le condensateur ou refroidisseur de gaz externe (5) au moyen du troisième organe d'expansion (6.3) pour délivrer de la chaleur à l'environnement de véhicule, et
- un moyen de mesure de la température (T, pT1) pour déterminer la température de réfrigérant à l'entrée (E) du condensateur de chauffage ou refroidisseur de gaz de chauffage interne (7), dans lequel
- en mode de chauffage, la température de réfrigérant à l'entrée (E) du condensateur de chauffage ou refroidisseur de gaz de chauffage interne (7) est limitée à une valeur de température maximale.

2. Procédé selon la revendication 1, dans lequel
- un moyen de mesure de température (pT1) est disposé à la sortie haute pression du compresseur de réfrigérant (4), et
- la température de réfrigérant à l'entrée (E) du condensateur de chauffage ou du refroidisseur de gaz de chauffage (7) est déterminée à partir d'un diagramme caractéristique au moyen de la valeur de capteur générée par le moyen de mesure de température.

3. Procédé selon la revendication 1, dans lequel la température de réfrigérant est déterminée au moyen d'un moyen de mesure de température (T) disposé à l'entrée (E) du condensateur de chauffage ou refroidisseur de gaz de chauffage (7).

4. Procédé selon l'une quelconque des revendications précédentes, dans lequel les étapes de procédé suivantes sont mises en œuvre lors d'un démarrage de fonctionnement en mode de climatisation :
- aspiration de réfrigérant de la branche de chauffage (2.3) par l'ouverture du deuxième organe d'arrêt (A2) et la fermeture à la fois du troisième organe d'arrêt (A3) et du troisième organe d'expansion (6.3), et
- fermeture du deuxième organe d'arrêt (A2) soit lorsque la pression de réfrigérant en aval du deuxième organe d'arrêt (A2) augmente, soit après une période de temps définie.

5. Procédé selon la revendication 4, dans lequel la pression de réfrigérant en aval du deuxième organe d'arrêt (A2) est détectée indirectement en ce que la charge de ventilateur d'un ventilateur d'un climatiseur et/ou la valeur de consigne réglée par une unité de commande de la température de l'air au niveau de l'évaporateur et/ou l'évolution de la pression du réfrigérant du côté basse pression du circuit de réfrigérant est détectée, et le deuxième organe d'arrêt (A2) est fermé lorsque la charge de ventilateur diminue et/ou lorsque la valeur de consigne augmente et/ou lorsque la pression de réfrigérant du côté basse pression augmente.

6. Procédé selon la revendication 4, dans lequel la pression de réfrigérant en aval du deuxième organe d'arrêt (A2) est déterminée directement au moyen d'un capteur de pression (p1) connecté en aval de celui-ci.

7. Procédé selon l'une quelconque des revendications précédentes, dans lequel les étapes de procédé suivantes sont mises en œuvre lors du démarrage de fonctionnement en mode de chauffage au moyen d'une fonction de pompe à chaleur à eau ou d'un processus triangulaire :
- fourniture d'une branche de refroidisseur (2.4) avec un refroidisseur (8) et un quatrième organe d'expansion affecté (6.4) pour mettre en œuvre la fonction de pompe à chaleur à eau, dans lequel la branche de refroidisseur (2.4) est connectée en parallèle avec la branche d'évaporateur (2.1),
- aspiration de réfrigérant de la branche de climatisation et de pompe à chaleur (2.2) par l'ouverture d'un quatrième organe d'arrêt (A4) qui connecte la branche de climatisation et de pompe à chaleur (2.2) au côté basse pression du circuit de réfrigérant (2) et par la fermeture à la fois du troisième organe d'expansion (6.3) et du deuxième organe d'expansion (6.2) ainsi que du premier organe d'arrêt (A1), et
- fermeture du quatrième organe d'arrêt (A4) soit lorsque la pression de réfrigérant en aval du quatrième organe d'arrêt (A4) augmente, soit après une période de temps définie.

8. Procédé selon la revendication 7, dans lequel la pression de réfrigérant en aval du quatrième organe d'arrêt (A4) est indirectement détectée, en ce que la température de réfrigérant du refroidisseur (8), est détectée, et le quatrième organe d'arrêt (A4) est fermé lorsque la température de réfrigérant augmente.

9. Procédé selon la revendication 7, dans lequel la pression de réfrigérant en aval du quatrième organe d'arrêt (A4) est déterminée directement au moyen d'un capteur de pression (p2) connecté en aval de celui-ci.

10. Procédé selon l'une quelconque des revendications 1 à 3, dans lequel les étapes de procédé suivantes sont mises en œuvre lors d'un démarrage de fonctionnement en mode de climatisation :
- fourniture d'une soupape antiretour (R1) en aval du deuxième organe d'arrêt (A2) pour empêcher un reflux de réfrigérant dans la branche de chauffage (2.3),
- aspiration de réfrigérant de la branche de chauffage (2.3) par l'ouverture du deuxième organe d'arrêt (A2) et la fermeture à la fois du troisième organe d'arrêt (A3) et du troisième organe d'expansion (6.3), et
- détente du réfrigérant en aval du deuxième organe d'arrêt (A2) jusqu'à un niveau de basse pression au moyen du deuxième organe d'expansion (6.2) avec le premier organe d'expansion (6.1) et/ou le quatrième organe d'expansion (6.4) ouvert au maximum en même temps.

11. Procédé selon l'une quelconque des revendications 1 à 3, dans lequel les étapes de procédé suivantes sont mises en œuvre lors d'un démarrage de fonctionnement en mode de climatisation :
- fourniture d'une branche de retour de pompe à chaleur (2.5) avec un quatrième organe d'arrêt (A4) et une soupape antiretour (R2), dans lequel la branche de climatisation et de pompe à chaleur (2.2) est connectée à la branche d'évaporateur (2.1) en aval de l'évaporateur (3) avec la branche de retour de pompe à chaleur (2.5),
- fourniture d'une branche d'aspiration (2.6) avec un cinquième organe d'expansion (6.5), dans lequel la branche de retour de pompe à chaleur (2.5) est connectée à la branche de chauffage (2.3) en aval du condensateur de chauffage ou refroidisseur de gaz de chauffage interne (7) avec la branche d'aspiration (2.6), et
- aspiration de réfrigérant de la branche de chauffage (2.3) par l'ouverture du cinquième organe d'expansion (6.5) et la fermeture à la fois du deuxième, troisième et quatrième organe d'arrêt (A2, A3, A4) et du troisième organe d'expansion (6.3).

12. Installation de réfrigération de véhicule (1) avec un circuit de réfrigérant (2) pour un mode de climatisation et pour un mode de chauffage mis en œuvre au moyen d'une fonction de pompe à chaleur pour mettre en œuvre le procédé selon l'une quelconque des revendications précédentes, comprenant :
- une branche d'évaporateur (2.1) avec un évaporateur (3) et un premier organe d'expansion (6.1) affecté à l'évaporateur,
- un compresseur de réfrigérant (4),
- une branche de climatisation et de pompe à chaleur (2.2) avec un condensateur ou refroidisseur de gaz externe (5) et un deuxième organe d'expansion (6.2) affecté à celui-ci dans sa fonction d'évaporateur de pompe à chaleur pour le mode de chauffage, dans laquelle la branche de climatisation et de pompe à chaleur (2.2) peut être connectée à la sortie haute pression du compresseur de réfrigérant (4) par un premier organe d'arrêt (A1) et à la branche d'évaporateur (2.1) par le deuxième organe d'expansion (6.2),
- une branche de chauffage (2.3) avec un condensateur de chauffage ou refroidisseur de gaz de chauffage interne (7) et un deuxième organe d'arrêt (A2) connecté en aval de celui-ci, dans laquelle la branche de chauffage (2.3) peut être connectée à la sortie haute pression du compresseur de réfrigérant (4) par l'intermédiaire d'un troisième organe d'arrêt (A3) et par l'intermédiaire du deuxième organe d'arrêt (A2) à la branche d'évaporateur (2.1) et au deuxième organe d'expansion (6.2),
- un troisième organe d'expansion (6.3) avec lequel la branche de chauffage (2.3) peut être connectée à la branche de climatisation et de pompe à chaleur (2.2) de sorte que le réfrigérant est détendu dans le condensateur ou refroidisseur de gaz externe (5) au moyen du troisième organe d'expansion (6.3) pour délivrer de la chaleur à l'environnement de véhicule, et
- un moyen de mesure de la température (T, pT1) pour déterminer la température de réfrigérant à l'entrée (E) du condensateur de chauffage ou refroidisseur de gaz de chauffage (7).

13. Installation de réfrigération de véhicule (1) selon la revendication 12, dans laquelle un capteur de pression (p1) est connecté en aval du deuxième organe d'arrêt (A2).

14. Installation de réfrigération de véhicule (1) selon la revendication 12 ou 13, dans laquelle
- une branche de refroidisseur (2.4) est vue d'un refroidisseur (8) et d'un quatrième organe d'expansion affecté (6.4) pour mettre en œuvre la fonction de pompe à chaleur à eau,
- la branche du refroidisseur (2.4) est connectée en parallèle avec la branche d'évaporateur (2.1), et
- un quatrième organe d'arrêt (A4) est prévu avec lequel la branche de climatisation et de pompe à chaleur (2.2) est connectée au côté basse pression du circuit de réfrigérant (2), et
- un capteur de pression (p2) est vu connecté en aval du quatrième organe d'arrêt (A4).

15. Installation de réfrigération de véhicule (1) selon la revendication 12, dans laquelle une soupape antiretour (R1) est connectée en aval du deuxième organe d'arrêt (A2).

16. Installation de réfrigération de véhicule (1) selon la revendication 12, dans laquelle
- une branche de retour de pompe à chaleur (2.5) avec un quatrième organe d'arrêt (A4) et une soupape antiretour (R2) est prévue, dans laquelle la branche de climatisation et de pompe à chaleur (2.2) peut être connectée à la branche d'évaporateur (2.1) en aval de l'évaporateur (3) avec la branche de retour de pompe à chaleur (2.5),
- une branche d'aspiration (2.6) avec un cinquième organe d'expansion (6.5) est prévue, dans laquelle la branche de retour de pompe à chaleur (2.5) peut être connectée à la branche de chauffage (2.3) en aval du condensateur de chauffage ou refroidisseur de gaz de chauffage interne (7) avec la branche d'aspiration (2.6).
